# EUROPEAN PATENT APPLICATION

(11) **EP 4 847 540 A1**
(43) Date of publication of application: **02.12.2026**
(21) Application number: 25179742.9
(22) Date of filing: 29.05.2025
(51) Int. Cl.: C08F 110/06, C08F 210/06, C08L 23/14, C08F 4/659

(54) **POLYMERISATION PROCESS**

(71) Applicant: Borealis GmbH, 1020 Vienna (AT)
(72) Inventor: LESKINEN, Pauli, 06850 Kulloo (FI); WANG, Jingbo, 4021 Linz (AT); GAHLEITNER, Markus, 4021 Linz (AT); BERNREITNER, Klaus, 4021 Linz (AT)
(74) Representative: HGF

(57) **Abstract**

The invention provides a process for the production of a polyolefin in a continuous multistage polymerisation reaction using a single site catalyst which allows for good productivity and reactor balance.

## Description

### Technical field

The present invention relates to a process for the production of a polyolefin in a continuous multistage polymerisation reaction. More particularly, the present invention relates to such a process carried out in the presence of a single site catalyst wherein an aluminium alkyl is introduced only into the prepolymerisation reactor during the process.

### Background

Polyolefin homopolymers and copolymers may be formed in a polymerisation reactor in the presence of an appropriate catalyst and can be used for the preparation of numerous end products, like films, pipes and moulded articles.

During the production of olefin polymers, like polypropylene homopolymers and polypropylene copolymers, in a commercial reactor a catalyst is used. In olefin polymerisations, Ziegler-Natta catalysts are frequently used. However, catalyst developments have resulted in use of single site catalysts (SSC), preferably metallocene catalysts, which comprise metallocene complexes of transition metals in combination with a cocatalyst.

One significant problem which is associated with the use of single site catalysts is, however, their sensitivity to poisons. Typically, in Ziegler Natta polymerisation processes, an external co-catalyst is employed to remove catalyst poisons. The external cocatalyst partly works as a poison scavenger. The use of aluminium alkyls in propylene polymerisation processes in general and gas phase polymerisation processes in particular has been known since the introduction of heterogeneous Ziegler-Natta type catalysts. Patents as early as US 3652527 describe the use of triethyl aluminium (TEAL) as an external co-catalyst for a Ziegler-Natta type catalyst.

However external co-catalysts are not generally used together with SSC (only the internal cocatalyst is used, which is typically an aluminoxane or boron compound). One reason for this is that, in the case of supported single-site catalysts (e.g., those with a silica-containing support), an external co-catalyst such as triethylaluminum (TEAL) can extract (leach) the metallocene complex from the support upon contact.

The extracted metallocene may then initiate polymerization in the liquid phase, which can lead to fouling or damage to the reactor.

Another problem and challenge when using aluminium alkyls with SSC is the use of an antistatic agent or antifouling feed to the reactor. It has been found that on an industrial scale polymer product may deposit on the walls of the polymerization reactor. This so-called "fouling" is often caused in part by fines and build-up of electrostatic charge on the walls on the reactor. Antifouling agents are added to the polymerization medium and dispersed therein to avoid such fouling, in particular during slurry polymerization. If an external co-catalyst is used however, it may reduce or even eliminate the effect of the antifouling agent, hence, so far, their utilisation together has been largely avoided.

WO 2005/104940 A2 discloses a process for preparing heterophasic polypropylene in which polymerization is carried out in the bulk phase within an autoclave reactor chamber containing a prepared metallocene catalyst system, propylene, and triethylaluminium. Following the bulk-phase polymerization, the resulting homopolymer matrix is further polymerized with ethylene in a gas phase step to produce a heterophasic copolymer. The gas phase step is conducted in the same reaction vessel as the bulk-phase reaction.

EP 1367068 A1 discloses a propylene polymerization process using a supported metallocene catalyst, in which triisobutylaluminium or triethylaluminium is fed into the polymerization reactor.

WO 2025/00343 A1 discloses a process for the production of a polyolefin homo- or copolymer in a continuous multistage polymerisation reaction in the presence of a single site catalyst, wherein the process comprises polymerising an olefin monomer and optionally comonomer(s) in a multi stage polymerisation reactor system comprising a first reactor and thereafter one or more gas phase reactor(s), wherein an aluminium alkyl is introduced into the gas phase reactor(s) and wherein the aluminium alkyl is not introduced to the first reactor.

There remains a need to develop new approaches to address the poisoning of single-site catalysts, preferably with reduced fouling, or ideally without causing fouling. This in turn may offer the possibility to improve catalyst lifetime and production efficiency in multistage polymerisation processes.

### Summary of the invention

In a first aspect, the invention provides a process for producing a polyolefin homo- or copolymer in a continuous multistage polymerisation reaction, the process comprising:
polymerising an olefin monomer in the presence of a single-site catalyst in a prepolymerisation reactor to obtain a prepolymerised catalyst; and
polymerising the olefin monomer in the presence of the prepolymerised catalyst in a first reactor to obtain a first polyolefin component,
wherein aluminium alkyl is introduced into the prepolymerisation reactor in an amount in the range from 0.015 to 0.3 g/kg of olefin monomer.

The inventors have surprisingly found that, in a continuous multistage polymerisation reactor system, aluminium alkyl introduced to the prepolymerisation reactor in high amounts acts as an effective scavenger to remove catalyst poisons like water, oxygen, alcohols, etc, present during the polymerisation using a single site catalyst. This has the beneficial, knock on effects of good productivity and better reactor balance that, surprisingly, could last throughout the multistage process, even up to the final production step, e.g. in a gas phase reactor.

It is also known that aluminium alkyls can promote the leaching of active metal sites from supported single-site catalysts, which can lead to fouling or damage to the reactor.

However, when aluminium alkyl was introduced into the prepolymerisation reactor at concentrations as high as 0.015 to 0.3 g/kg, no significant fouling or damage to the reactor was observed.

In a second aspect, the invention provides a polyolefin obtainable (e.g. obtained) by the process of the first aspect of the invention.

### Brief Description of Figures

Embodiments of the invention are further described hereinafter with reference to the accompanying figures, in which:
**Figure 1** is a bar chart showing the total catalyst productivity in the heterophasic polypropylene examples (CE01 and IE01-IE03).
**Figure 2** is a bar chart showing the residence time in the second gas-phase reactor (GPR) in the heterophasic polypropylene examples.
**Figure 3** is a bar chart showing the xylene solubles (i.e., rubber content) of the heterophasic polypropylene produced in the examples.
**Figure 4** is a bar chart showing the polymer production split in the second GPR in the heterophasic polypropylene examples.
**Figure 5** is a bar chart showing the xylene solubles of the polymer component from the first gas-phase reactor in heterophasic polypropylene production examples CE01 and IE01.
**Figure 6** is a bar chart showing the xylene solubles of the polypropylene homopolymer produced in the examples (CE01 and IE01-IE03).
**Figure 7** shows the polymer production split between the loop reactor (first step) and the gas-phase reactor (second step) in the propylene homopolymer examples.
**Figure 8** is a bar chart showing the total catalyst productivity in the polypropylene homopolymer examples.

### Detailed Description of Invention

### Aluminium Alkyl

In the process of the invention aluminium alkyl is introduced into the prepolymerisation reactor in an amount within the range from 0.015 to 0.3 g/kg.

For the absence of doubt, "g/kg" is grams of aluminium alkyl introduced into the prepolymerisation reactor per kilogram of olefin monomer introduced into the prepolymerisation reactor and first reactor.

It may be that aluminium alkyl is introduced into the prepolymerisation reactor in an amount within the range from 0.015 to 0.2 g/kg. Preferably, aluminium alkyl is introduced into the prepolymerisation reactor in an amount within the range from 0.02 to 0.1 g/kg. More preferably, aluminium alkyl is introduced into the prepolymerisation reactor in an amount within the range from 0.03 to 0.07 g/kg. Most preferably, aluminium alkyl is introduced into the prepolymerisation reactor in an amount within the range from 0.04 to 0.07 g/kg.

For the absence of doubt, if a mixture of aluminium alkyl compounds is used then this figure refers to the total content of all aluminium alkyls used.

The process of the invention is continuous and hence alternatively viewed, the aluminium alkyl may be introduced into the prepolymerisation reactor in an amount within the range from 0.015 to 0.3 g/kg per hour. It may be that aluminium alkyl is introduced into the prepolymerisation reactor in an amount within the range from 0.015 to 0.2 g/kg per hour. Preferably, aluminium alkyl is introduced into the prepolymerisation reactor in an amount within the range from 0.02 to 0.1 g/kg per hour. More preferably, aluminium alkyl is introduced into the prepolymerisation reactor in an amount within the range from 0.03 to 0.07 g/kg per hour.

For the absence of doubt, if a mixture of aluminium alkyl compounds is used then this figure refers to the total content of all aluminium alkyls used.

The aluminium alkyl may react with catalyst poisons to produce compounds that may be easily purged or removed from the reactors.

The aluminium alkyl of the invention may be of formula AlR₃₋ₓClₓ where R is a C₁₋₁₀ alkyl group and x is an integer 0 or 1. Mixtures of aluminium alkyls can be used in the process of the invention.

An aluminium alkyl of the invention is preferably of formula Al(C₁₋₁₀-alkyl)₃ e.g. Al(C₁₋₆-alkyl)₃, especially Al(C₁₋₄-alkyl)₃. Each alkyl may be the same or different, preferably the same. It is also possible for the aluminium alkyl to be an aluminium-halo-alkyl, e.g. AlEt₂Cl. Alkyl groups can be linear or branched.

It is preferred if all alkyl groups are the same on the aluminium alkyl.

Preferred aluminium alkyls include triethylaluminum (TEAL), trimethylaluminum (TMA), tri-isobutylaluminum (TIBA), tri-n-butylaluminium (TNBA) and tri-n-hexylaluminum (TNHAL).

Triethyl-aluminium (TEAL), tri-isobutyl-aluminium (TIBA), or a mixture thereof is especially preferred. The aluminium alkyl may be TEAL. The aluminium alkyl may be TIBA.

The aluminium alkyl is typically fed directly to the prepolymerisation reactor. The aluminium alkyl and the olefin monomer may be introduced into the prepolymerisation reactor as a mixture. Typically, the single site catalyst is introduced into the prepolymerisation reactor independently from the aluminium alkyl.

The aluminium alkyl is generally fed in pure form or in the form of a solution comprising a hydrocarbon diluent (e.g. propane, pentane or hexane).

In embodiments, aluminium alkyl is also introduced into the first reactor, e.g. a slurry loop reactor. In embodiments, aluminium alkyl is not introduced into the first reactor, e.g. a slurry loop reactor. In embodiments, aluminium alkyl is also introduced into the second reactor, e.g. a gas phase reactor. In alternative embodiments, aluminium alkyl is not introduced into the second reactor, e.g. a gas phase reactor. It may be that the aluminium alkyl is not introduced into any reactor other than the prepolymerisation reactor. It may be that the aluminium alkyl is not introduced into any gas phase reactors present.

### Polyolefin

The process of the invention produces a polyolefin polymer. The polyolefin may be a polyolefin homopolymer. Alternatively, the polyolefin may be a polyolefin copolymer.

Where the polyolefin is a copolymer, the process comprises polymerising the olefin monomer in the presence of the single-site catalyst and at least one comonomer. The resulting copolymer is typically formed from the olefin monomer and a different olefin comonomer(s). The olefin comonomer(s) may be selected from ethylene and a C₃-C₁₀ alpha olefin, excluding the olefin monomer. For example, the comonomer(s) may be selected from ethylene and a C₃-C₆ alpha olefin, again excluding the olefin monomer.

Typically, the comonomer content is in the range from 0.1 to 15 wt%, e.g. in the range from 0.3 to 12 wt%, and preferably in the range from 0.1 to 6.0 wt%, relative to the total weight of the copolymer as a whole

The polyolefin may be a polyethylene. In this embodiment, the olefin monomer is ethylene. The polyethylene may be a polyethylene homopolymer. The polyethylene may be a polyethylene copolymer.

Preferably the polyolefin is polypropylene. In this embodiment, the olefin monomer is propylene. The polypropylene may be a polypropylene homopolymer. The polypropylene may be a polypropylene copolymer. If the polypropylene is a copolymer, the comonomer may be selected from ethylene and a C₄-C₁₀ alpha olefin. In a preferred embodiment, the comonomer is ethylene.

It may be that the polypropylene copolymer is a heterophasic polypropylene.

Polyolefins (e.g. polypropylene) made by the processes of the invention may have Mw (weight average molecular weight) values in the range from 40 to 2000 kg/mol, preferably in the range from 50 to 1 500 kg/mol. The Mw may depend on the intended use and the amount of hydrogen used as Mw regulating agent.

The polyolefin (e.g. polypropylene) may have an MFR₂ in the range from 0.1 to 5000 g/10min (measured at 230°C and 2.16 kg load ISO1133).

In an embodiment, the polyolefin (e.g. polypropylene) has an MFR₂ in the range from 2.0 to 15 g/10min (measured at 230°C and 2.16 kg load ISO1133).

The polyolefin may be polypropylene having a melting point in the range from 130 to 171 °C. The polypropylene may have a melting point within the range from 145 °C to 165 °C. Preferably, the polypropylene has a melting point within the range from 150 °C to 160 °C. More preferably, the polypropylene has a melting point within the range from 152.50 °C to 157.5 °C. Such temperature ranges are particularly relevant when the polyolefin is a polypropylene homopolymer.

### Multistage Polymerisation Process

The process according to the invention is a multistage polymerisation process involving two or more reactors connected in series. It comprises at least a prepolymerisation step in a prepolymerisation reactor, followed by a first polymerisation step in a first reactor. The first polymerisation step in the first reactor provides a first polyolefin component. The polyolefin therefore comprises at least the first polyolefin component.

Typically, a second polymerisation step is also included, carried out in a second reactor, e.g. a gas phase reactor. Where a second polymerisation step is present, the polyolefin comprises both the first and second polyolefin components.

The process may comprise further polymerisation steps in further reactors, each of which provides respective polyolefin components. For example, the process may comprise a second polymerisation step carried out in a first gas phase reactor followed by a third polymerisation step carried out in a second gas phase reactor, which provide second and third polyolefin components, respectively.

Each polyolefin component is produced in a separate polymerisation stage, typically under different reaction conditions. The reaction product (i.e., the polyolefin component) from each stage, including the active polymerisation catalyst, is transferred to the subsequent stage.

The prepolymerisation step results in the formation of a prepolymerised catalyst, where a small amount of polymer (prepolymer) is formed at the active site of the single-site catalyst.

In the subsequent polymerisation step in the first reactor, additional olefin monomer is polymerised in the presence of this prepolymerised catalyst. This results in the growth of the first polyolefin component (PC1) from the active site of the single site catalyst containing the prepolymer.

In the following polymerisation step (e.g., in a gas phase reactor), further olefin monomer is polymerised, leading to the formation of the second polyolefin component (PC2) from the active site of the single site catalyst comprising PC1.

This addition polymerisation process continues in any third and subsequent reactors. Thus, the prepolymer, PC1, PC2, and any further polyolefin components, typically form part of the same polymer chain.

Each polymerisation step may involve conventional propylene homopolymerisation or copolymerisation, using standard techniques e.g. gas-phase, slurry-phase, or liquidphase polymerisation in conventional reactors (e.g., loop reactors, gas-phase reactors, batch reactors; see WO97/44371 and WO96/18662).

In one embodiment, the first polyolefin component is a propylene homopolymer or copolymer produced in the first polymerisation stage, and fed to the second stage. The second stage may produce a further propylene homopolymer or a propylene copolymer (second polyolefin component). In some embodiments, both stages produce propylene homopolymers. In other embodiments both produce copolymers. Alternatively, the first stage may yield a propylene homopolymer and the second a propylene copolymer. The polyolefin may be heterophasic polypropylene.

If present, the third polyolefin component may be a propylene homopolymer, e.g. a polypropylene copolymer with ethylene. Alternatively, the third polyolefin component may be a propylene homopolymer.

The prepolymerisation, first, and second (and any further) stages are discussed in greater detail below.

### Prepolymerisation

The purpose of the prepolymerisation is to polymerise a small amount of polymer (prepolymer) onto the catalyst at a low temperature and/or a low monomer concentration to form a prepolymerised catalyst. By prepolymerisation it is possible to improve the performance of the catalyst in slurry and/or modify the properties of the final polymer. The prepolymerisation step is preferably conducted in slurry.

Thus, the prepolymerisation step may be conducted in a loop reactor. The prepolymerisation is preferably conducted in an inert diluent, typically a hydrocarbon diluent e.g. methane, ethane, propane, n-butane, isobutane, pentanes, hexanes, heptanes, octanes etc., or their mixtures. Preferably the diluent is a low-boiling hydrocarbon having from 1 to 4 carbon atoms or a mixture of such hydrocarbons.

The temperature in the prepolymerisation step is typically in the range from 1 to 90 °C. The temperature in the prepolymerisation step may be in the range from 10 to 50 °C. The temperature in the prepolymerisation step may be in the range from 15 to 30 °C.

The pressure is not critical and is typically in the range from 1 to 150 bar, preferably from 35 to 75 bar.

Prepolymerisation refers to a polymerisation step in which the amount of prepolymer produced is within the range of 0.1 to 5 wt% of the total weight of the polyolefin homo- or copolymer.

For the purposes of this specification, any polymerisation step in which the amount of polymer produced is more than 5 wt% of the total polyolefin weight is produced is not considered a prepolymerisation step.

Similarly, a prepolymerisation reactor is defined as a reactor in which the amount of prepolymer produced falls within the range of 0.1 to 5 wt% of the total weight of the polyolefin homo- or copolymer. A reactor in which more than 5 wt% of the total polyolefin weight is produced is not considered a prepolymerisation reactor.

Preferably the amount of prepolymer produced in the prepolymerisation step is within the range of 0.3 to 3 wt% of the total weight of the polyolefin homo- or copolymer. More preferably, the amount is in the range of 0.5 to 2 wt%.

As the person skilled in the art knows, the catalyst particles recovered from a continuous prepolymerisation reactor do not all contain the same amount of prepolymer. Instead, each particle has its own characteristic amount which depends on the residence time of that particle in the prepolymerisation reactor. As some particles remain in the reactor for a relatively long time and some for a relatively short time, then also the amount of prepolymer on different particles is different and some individual particles may contain an amount of prepolymer which is outside the above limits. However, the average amount of prepolymer produced is within the limits specified above.

It may be that amount of monomer polymerised in the prepolymerisation is within the range from 0.1 to 3000, e.g. 0.1 to 1000, grams per one gram of solid catalyst component is polymerised.

The molecular weight of the prepolymer may be controlled by hydrogen as it is known in the art. Further, antistatic additives may be used to prevent the particles from adhering to each other or the walls of the reactor, as disclosed in WO-A-96/19503 and WO-A-96/32420. Furthermore, olefin and hydrogen and optionally the cocatalyst are added to the prepolymerisation reactor

In the process of the invention, the single site catalysed polymerisation is preferably started as is known in the state of the art by introducing the single site catalyst, as described below, via a catalyst feed tank, preferably via an oil catalyst feed system or via a wax catalyst feed system to the first reactor, or if present, to the prepolymerisation reactor.

The single site catalyst components are preferably all introduced to the prepolymerisation step. However, where the solid catalyst component and the cocatalyst can be fed separately it is possible that only a part of the cocatalyst is introduced into the prepolymerisation stage and the remaining part into subsequent polymerisation stages. Also in such cases it is necessary to introduce so much cocatalyst into the prepolymerisation stage that a sufficient polymerisation reaction is obtained therein.

It may be that the single site catalyst components are introduced into the prepolymerisation reactor in an amount within the range from 0.02 to 0.6 grams per kilogram of olefin monomer introduced into the prepolymerisation reactor and first reactor.

It may be that the single site catalyst components are introduced to the prepolymerisation step at a rate within the range of 0.5 to 5 g/h.

Alternatively, it may be that the single site catalyst components are introduced to the prepolymerisation step at a rate within the range of 0.5 to 5 kg/h. Preferably, the single site catalyst components are introduced to the prepolymerisation step at a rate within the range of 0.7 to 2 kg/h. More preferably, the single site catalyst components are introduced to the prepolymerisation step at a rate within the range of 1 to 2 kg/h.

The average residence time in the prepolymerisation reactor will generally less than 1 hour. For example, the average residence time in the prepolymerisation reactor may be within the range from 0.1 to 0.5 hours.

Hydrogen may be introduced into any given reactor to control the molecular weight of the polymer. Such a technique is well known well-known and routine in the art. It may be that hydrogen is introduced into the prepolymerisation reactor in an amount of 0.005 to 0.1 mol per kmol olefin monomer. It may be that hydrogen is introduced into the prepolymerisation reactor in an amount of 0.01 to 0.05 mol per kmol olefin monomer.

### First Reactor

The prepolymerised catalyst and additional olefin are introduced into the first reactor. For the absence of doubt, the prepolymerisation reactor and the first reactor are separate reactors. The polymerisation in the first reactor (first polymerisation stage) results in the formation of a first polyolefin component (PC1).

The first polymerisation stage is preferably a slurry polymerisation step, thus the first reactor is preferably a slurry reactor, more preferably a slurry loop reactor.

The reaction conditions in the slurry phase and the gas phase reactor (e.g. temperature, pressure, amount of propylene and optional comonomer(s), amount of hydrogen) are chosen according to the desired product parameters of the first product. In general, such a process is conventional.

In an embodiment, the process comprises polymerising the olefin monomer in the presence of the single site catalyst and at least one comonomer in the first reactor to form PC1. In this embodiment, PC1 is a copolymer.

The comonomer(s) is typically a different olefin comonomer(s) to the olefin monomer. The olefin comonomer(s) may be selected from ethylene and a C₃-C₁₀ alpha olefin, excluding the olefin monomer. For example, the comonomer(s) may be selected from ethylene and a C₃-C₆ alpha olefin, excluding the olefin monomer.

Where the olefin monomer is propylene, the comonomer may be selected from ethylene and a C₄-C₁₀ alpha olefin. The comonomer may be is ethylene.

The slurry polymerisation may take place in an inert diluent, typically a hydrocarbon diluent e.g. methane, ethane, propane, n-butane, isobutane, pentanes, hexanes, heptanes, octanes etc., or their mixtures. The diluent may be a low-boiling hydrocarbon having from 1 to 4 carbon atoms or a mixture of such hydrocarbons. For example, the diluent may be propane, possibly containing minor amounts of methane, ethane and/or butane. When the polyolefin is polypropylene the slurry polymerisation typically does not take place in an inert diluent.

The monomer (e.g. ethylene) content in the fluid phase of the slurry, if present, may be from 1 to 50 % by mole, preferably from 2 to 20 % by mole and in particular from 2 to 10 % by mole. The benefit of having a high monomer (e.g. ethylene concentration) is that the productivity of the catalyst is increased but the drawback is that more monomer (e.g. ethylene) then needs to be recycled than if the concentration was lower.

The monomer (e.g. propylene) content in the fluid phase of the slurry, if present, may be greater than 80% by mole, preferably greater than 90% by mole and in particular within the range from 95 to 99% by mole. The benefit of having a high monomer (e.g. propylene concentration) is that the productivity of the catalyst is increased but the drawback is that more monomer (e.g. propylene) then needs to be recycled than if the concentration was lower.

The temperature in the first (e.g. slurry) reactor is typically in the range from 50 to 110 °C. It may be that the temperature in the first (e.g. slurry) reactor is in the range from 55 to 90 °C. It may be that the temperature in the first (e.g. slurry) reactor is in the range from 60 to 80 °C. An excessively high temperature should be avoided to prevent partial dissolution of the polymer into the diluent and the fouling of the reactor.

The first (e.g. slurry) reactor pressure will generally be in the range from 20 to 80 bar. It may be that the first (e.g. slurry) reactor pressure is within the range from 35 to 75 bar. The first (e.g. slurry) reactor pressure may be within the range from 40 to 70 bar.

A slurry polymerisation may be conducted in any known reactor used for slurry polymerisation. Such reactors include a continuous stirred tank reactor and a loop reactor. It is especially preferred to conduct the slurry polymerisation in a loop reactor. In such reactors the slurry is circulated with a high velocity along a closed pipe by using a circulation pump. Loop reactors are generally known in the art and examples are given, for instance, in US-A-4582816, US-A-3405109, US-A-3324093, EP-A-479186 and US-A-5391654. It is thus preferred to conduct the first polymerisation stage as a slurry polymerisation in a loop reactor.

In one embodiment, an antifouling agent can be used in the first polymerisation stage. Suitable antifouling agents are materials that prevent fouling of the inside of the reactor wall. In an embodiment, the antifouling agent is selected from cationic agents, anionic agents, nonionic agents, organometallic agents, polymeric agents or mixtures thereof. Such antifouling agents are commercially available.

The slurry may be withdrawn from the reactor either continuously or intermittently. A preferred way of intermittent withdrawal is the use of settling legs where slurry is allowed to concentrate before withdrawing a batch of the concentrated slurry from the reactor. The use of settling legs is disclosed, among others, in US-A-3374211, US-A-3242150 and EP-A-1310295. Continuous withdrawal is disclosed, among others, in EP-A-891990, EP-A-1415999, EP-A-1591460 and WO-A-2007/025640. The continuous withdrawal is advantageously combined with a suitable concentration method, as disclosed in EP-A-1310295 and EP-A-1591460. It is preferred to withdraw the slurry from the first polymerisation stage continuously.

The average residence time in the first polymerisation (e.g. slurry) reactor will generally be in the range from 0.2 to 5.0 hours, e.g. 0.3 to 2 hours. Preferably the residence time is in the range from 0.2 to 1.0 hour, more preferably in the range from 0.3 to 0.6 hours.

The diluent (if present) will generally be an aliphatic hydrocarbon having a boiling point in the range from -70 to +100 °C. In such reactors, polymerisation may if desired be effected under supercritical conditions.

It may be that hydrogen is introduced into the first reactor in an amount in the range from 0.01 to 0.5 mol per kmol olefin monomer. It may be that hydrogen is introduced into the first reactor in an amount in the range from 0.05 to 0.15 mol per kmol olefin monomer.

The production rate in the first reactor (e.g., a slurry reactor) may be controlled by parameters e.g. the aluminium alkyl feed rate, catalyst feed rate, and olefin monomer concentration. The production rate in this reactor may be in the range from 30 to 90% of the total production rate. The production rate in the first reactor may be within the range from 40 to 80% of the total production rate. The production rate in the first reactor may be within the range from 55 to 75% of the total production rate.

It may be that the MFR2 of PC1 is within the range from 0.1 to 5000 g/10 min.

It may be that the MFR₂ of PC1 is within the range from 2 to 10 g/10 min, e.g. from 2.5 to 7.5 g/10min.

It may be that the XS of PC1 is less than or equal to 1.5 wt%. It may be that the XS of PC1 is less than or equal to 1 wt%. It may be that the XS of PC1 is less than or equal to 0.5 wt%. It may be that the XS of PC1 is within the range from 0.25 to 0.75 wt%.

It may be that the bulk density of PC1 is within the range from 250 to 500 kg/m³, e.g. from 300 to 400 kg/m³.

### Second Reactor

The process may further comprise polymerising the olefin monomer in the presence of the single site catalyst and the first polyolefin component in a second reactor to form a second polyolefin component (PC2).

It will thus be appreciated that the second polymerisation stage generates a polyolefin polymer, which combines with the polyolefin polymer from the first polymerisation stage.

In an embodiment, the process comprises polymerising the olefin monomer in the presence of the single site catalyst, the first polyolefin component, and at least one comonomer in a second reactor to form a second polyolefin component (PC2). In this embodiment, PC2 is a copolymer.

The comonomer(s) is typically a different olefin comonomer(s) to the olefin monomer. The olefin comonomer(s) may be selected from ethylene and a C₃-C₁₀ alpha olefin, excluding the olefin monomer. For example, the comonomer(s) may be selected from ethylene and a C₃-C₆ alpha olefin, excluding the olefin monomer.

Where the olefin monomer is propylene, the comonomer may be selected from ethylene and a C₄-C₁₀ alpha olefin. In a preferred embodiment, the comonomer is ethylene.

It may be that ethylene is introduced into the second reactor in an amount within the range from 2 to 25 wt% of the total amount of propylene added to the second reactor. More typically ethylene is introduced into the second reactor in an amount within the range from 5 to 15 wt% of the total amount of propylene added to the second reactor.

The second polymerisation stage is typically a gas phase polymerisation step, i.e. carried out in a gas phase reactor. Thus, the second reactor may be a gas phase reactor. Any suitable gas phase reactor known in the art may be used, e.g. a fluidised bed gas phase reactor.

The temperature in the second reactor (e.g. GPR) will generally be in the range from 50 to 130 °C (e.g. 60 to 115 °C, or 60 to 100 °C).

The pressure in the second reactor (e.g. GPR) will generally be in the range of 5 from 60 bar. The pressure in the second reactor (e.g. GPR) may be in the range from 10 to 40 bar. The pressure in the second reactor (e.g. GPR) may be in the range from 15 to 30 bar.

The residence time in the second reactor (e.g. GPR) will generally be within the range from 1 to 8 hours.

The gas used will commonly be a non-reactive gas e.g. nitrogen or low boiling point hydrocarbons e.g. propane together with monomer (e.g. propylene).

It may be that hydrogen is introduced into the second reactor in an amount in the range from 0.1 to 5 mol per kmol olefin monomer. It may be that hydrogen is introduced into the second reactor in an amount in the range from 0.5 to 3 mol per kmol olefin monomer. It may be that hydrogen is introduced into the second reactor in an amount in the range from 1 to 2 mol per kmol olefin monomer.

The split between the first polymerisation stage (including any prepolymerisation stage) and the second polymerisation stage (including any subsequent polymerisation stages) (i.e. between the slurry polymerisation and the gas phase polymerisation) is typically in the range from 30:70 to 70:30, more preferably in the range from 35:65 to 65:35, most preferably in the range from 40:60 to 60:40.

Thus, a preferred embodiment of the invention is wherein the first reactor is a slurry reactor, e.g. a loop reactor, and the second reactor is a gas phase reactor, e.g. a fluidised bed gas phase reactor. A preferred "loop-gas phase"-process, e.g. that developed by Borealis A/S, Denmark (known as BORSTAR^{®} technology) is described e.g. in patent literature. Examples include those disclosed in EP 0887 379, WO92/12182 and WO 2005/002744.

In the fluidized bed reactor, the catalytic material in the fluidized bed reactor is typically supported by a porous plate known as a distributor. A fluid is then forced through the distributor and up through the catalytic material. As the fluid velocity increases, the reactor will reach a stage where the force of the fluid on the solids is enough to balance the weight of the solid material. This stage is known as incipient fluidization and occurs at this minimum fluidization velocity. Once this minimum velocity is surpassed, the contents of the reactor bed begin to expand and swirl around much like an agitated tank.

It is conventional to provide the fluidized bed reactor with a circulation gas line to return the fluidizing gas to the base of the reactor.

The process of the invention will be understood to be a continuous process. The polymer produced in the first reactor is typically continuously fed to the second reactor throughout the process.

The precise control of the polymerisation conditions and reaction parameters is within the skill of the art. The pressure and temperature of the second reactor are typically kept essentially constant throughout the process.

PC2 have an MFR₂ in the range from 0.1 to 5000 g/10min.

It may be that the polyolefin is polypropylene homopolymer and the MFR₂ of PC2 is within the rage from 1 to 10 g/10 min, e.g. from 1 to 7.5 g/10min. It may be that the MFR₂ of PC2 is within the rage from 2 to 6 g/10 min.

It may be that the polyolefin is heterophasic polypropylene and the MFR₂ of PC2 is within the rage from 0.2 to 100 g/10 min. It may be that the MFR₂ of PC2 is around 0.2 g/10min. It may be that the MFR₂ of PC2 is within the range from 1 to 8 g/10 min.

It may be that the XS of PC2 is less than or equal to 1.5 wt% It may be that the XS of PC1 is less than or equal to 1 wt%. It may be that the XS of PC2 is less than or equal to 0.5 wt%.

It may be that the bulk density of PC2 is within the range from 250 to 500 kg/m³, e.g. from 300 to 400 kg/m³.

### Third and Further Reactors

As mentioned above, the process may include additional polymerisation steps in further reactors, each producing a respective polyolefin component.

In some embodiments, more than one gas phase reactor is employed, with each additional reactor connected in series following the second polymerisation stage. For example, at least two, or even at least three, gas phase reactors may be used.

The process may involve a second polymerisation step in a first gas phase reactor, followed by a third polymerisation step in a second gas phase reactor, yielding second and third polyolefin components, respectively. The third polyolefin component may be as defined above for the second polyolefin component.

The operating conditions in the third and any further reactors each reactor (e.g. temperature, pressure, etc) will typically vary and may be independently defined as described above. Comonomers (e.g. ethylene) may be introduced into one or more of the reactors, but not necessarily all.

For example, the process may involve a second polymerisation step in a first gas phase reactor, followed by a third polymerisation step in a second gas phase reactor, wherein the olefin monomer is propylene and ethylene comonomer is introduced into the second gas phase reactor (but not the first). In this embodiment, the second polyolefin component will be a polypropylene homopolymer and the third polyolefin component will be a propylene-ethylene copolymer.

### Single Site Catalyst

The single site catalyst is preferably a metallocene catalyst. The single site catalyst may be a non-metallocene single site catalyst. Single site catalysts preferably comprise a transition metal complex which contains at least one cyclopentadienyl, indenyl or fluorenyl ligand. Preferably the single site complex contains two cyclopentadienyl, indenyl or fluorenyl ligands, especially two bridged cyclopentadienyl, indenyl or fluorenyl ligands. Further, the ligands may have substituents, e.g. alkyl groups, aryl groups, arylalkyl groups, alkylaryl groups, silyl groups, siloxy groups, alkoxy groups or other heteroatom groups. Examples of suitable metallocene compounds are given, among others, in EP 629631, EP 629632, WO 00/26266, WO 02/002576, WO 02/002575, WO 99/12943, WO 98/40331, EP 776913, EP 1074557 and WO 99/42497, EP2402353, EP2729479, and EP2746289.

The single site complex is ideally an organometallic compound (C) comprising a transition metal (M) of Group 3 to 10 of the Periodic Table (IUPAC 2007) or of an actinide or lanthanide. The term "an organometallic compound (C)" in accordance with the present invention includes any metallocene or non-metallocene compound of a transition metal which bears at least one organic (coordination) ligand and exhibits the catalytic activity together with a cocatalyst. The transition metal compounds are well known in the art and the present invention covers compounds of metals from Group 3 to 10, e.g. Group 3 to 7, or 3 to 6, or Group 4 to 6 of the Periodic Table, (IUPAC 2007), as well as lanthanides or actinides.

In one embodiment the organometallic compound (C) has the following formula (I):

(L)ₘRₙMX_{q} (I)

wherein
"M" is a transition metal (M) transition metal (M) of Group 3 to 10 of the Periodic Table (IUPAC 2007),
each "X" is independently a monoanionic ligand, e.g. a _{σ}-ligand,
each "L" is independently an organic ligand which coordinates to the transition metal "M",
"R" is a bridging group linking said organic ligands (L),
"m" is 1, 2 or 3, preferably 2
"n" is 0, 1 or 2, preferably 1,
"q" is 1, 2 or 3, preferably 2 and
m+q is equal to the valency of the transition metal (M).
"M" is preferably selected from the group consisting of zirconium (Zr), hafnium (Hf), or titanium (Ti), more preferably selected from the group consisting of zirconium (Zr) and hafnium (Hf).

In a more preferred embodiment, each organic ligand (L) is independently:
(a) a substituted or unsubstituted cyclopentadienyl or a bi- or multicyclic derivative of a cyclopentadienyl which optionally bear further substituents and/or one or more hetero ring atoms from a Group 13 to 16 of the Periodic Table (IUPAC); or
(b) an acyclic η¹- to η ⁴- or η⁶-ligand composed of atoms from Groups 13 to 16 of the Periodic Table, and in which the open chain ligand may be fused with one or two, preferably two, aromatic or non-aromatic rings and/or bear further substituents; or
(c) a cyclic η¹- to η⁴- or η⁶-, mono-, bi- or multidentate ligand composed of unsubstituted or substituted mono-, bi- or multicyclic ring systems selected from aromatic or non-aromatic or partially saturated ring systems, such ring systems containing optionally one or more heteroatoms selected from Groups 15 and 16 of the Periodic Table.

Organometallic compounds (C) preferably have at least one organic ligand (L) belonging to the group (a) above. Such organometallic compounds are called metallocenes.

More preferably at least one of the organic ligands (L), preferably both organic ligands (L), is (are) selected from the group consisting of cyclopentadienyl, indenyl, tetrahydroindenyl, fluorenyl, which can be independently substituted or unsubstituted.

Further, in case the organic ligands (L) are substituted it is preferred that at least one organic ligand (L), preferably both organic ligands (L), comprise one or more substituents independently selected from C₁ to C₂₀ hydrocarbyl or silyl groups, which optionally contain one or more heteroatoms selected from groups 14 to 16 and/or are optionally substituted by halogen atom(s),

The term "C₁ to C₂₀ hydrocarbyl group", whenever used in the present application, includes C₁ to C₂₀ alkyl, C₂ to C₂₀ alkenyl, C₂ to C₂₀ alkynyl, C₃ to C₂₀ cycloalkyl, C₃ to C₂₀ cycloalkenyl, C₆ to C₂₀ aryl, C₇ to C₂₀ alkylaryl or C₇ to C₂₀ arylalkyl groups or mixtures of these groups e.g. cycloalkyl substituted by alkyl.

Further, two substituents, which can be the same or different, attached to adjacent C-atoms of a ring of the ligands (L) can also be taken together form a further mono or multicyclic ring fused to the ring.

Preferred hydrocarbyl groups are independently selected from linear or branched C₁ to C₁₀ alkyl groups, optionally interrupted by one or more heteroatoms of groups 14 to 16, like O, N or S, and substituted or unsubstituted C₆ to C₂₀ aryl groups.

Linear or branched C₁ to C₁₀ alkyl groups, optionally interrupted by one or more heteroatoms of groups 14 to 16, are preferably selected from methyl, ethyl, propyl, isopropyl, tertbutyl, isobutyl, C₅₋₆ cycloalkyl, OR, SR, where R is C₁ to C₁₀ alkyl group.

C₆ to C₂₀ aryl groups are more preferably phenyl groups, optionally substituted with 1 or 2 C₁ to C₁₀ alkyl groups as defined above.

By "σ-ligand" is meant throughout the invention a group bonded to the transition metal (M) via a sigma bond.

Further, the ligands "X" are preferably independently selected from the group consisting of hydrogen, halogen, C₁ to C₂₀ alkyl, C₁ to C₂₀ alkoxy, C₂ to C₂₀ alkenyl, C₂ to C₂₀ alkynyl, C₃ to C₁₂ cycloalkyl, C₆ to C₂₀ aryl, C₆ to C₂₀ aryloxy, C₇ to C₂₀ arylalkyl, C₇ to C₂₀ arylalkenyl, -SR", -PR"₃, -SiR"₃, -OSiR"₃ and -NR"₂, wherein each R" is independently hydrogen, C₁ to C₂₀ alkyl, C₂ to C₂₀ alkenyl, C₂ to C₂₀ alkynyl, C₃ to C₁₂ cycloalkyl or C₆ to C₂₀ aryl.

More preferably, the "X" ligands are selected from halogen, C₁ to C₆ alkyl, C₅ to C₆ cycloalkyl, C₁ to C₆ alkoxy, phenyl and benzyl groups.

The bridging group "R" may be a divalent bridge, preferably selected from -R'₂C-, - R'₂C-CR'₂-, -R'₂Si-, -R'₂Si-Si R'₂-, -R'₂Ge-, wherein each R' is independently a hydrogen atom, C₁ to C₂₀ alkyl, C₂ to C₁₀ cycloalkyl, tri(C₁-C₂₀-alkyl)silyl, C₆- C₂₀-aryl, C₇- C₂₀ arylalkyl and C₇- C₂₀-alkylaryl .

More preferably the bridging group "R" is a divalent bridge selected from -R'₂C-, - R'₂Si-, wherein each R' is independently a hydrogen atom, C₁ to C₂₀ alkyl, C₂ to C₁₀ cycloalkyl, C₆- C₂₀-aryl, C₇- C₂₀ arylalkyl and C₇- C₂₀-alkylaryl.

Another subgroup of the organometallic compounds (C) of formula (I) is known as non-metallocenes wherein the transition metal (M), preferably a Group 4 to 6 transition metal, suitably Ti, Zr or Hf, has a coordination ligand other than a cyclopentadienyl ligand.

The term "non-metallocene" used herein means compounds, which bear no cyclopentadienyl ligands or fused derivatives thereof, but one or more noncyclopentadienyl η-, or σ-, mono-, bi- or multidentate ligand. Such ligands can be chosen e.g. from the groups (b) and (c) as defined above and described e.g. in WO 01/70395, WO 97/10248, WO 99/41290, and WO 99/10353), and further in V. C. Gibson et al., in Angew. Chem. Int. Ed., engl., vol 38, 1999, pp 428 447, the disclosures of which are incorporated herein by reference.

However, the organometallic compound (C) of the present invention is preferably a metallocene as defined above.

In one preferred embodiment, therefore, the invention relates to a process as hereinbefore defined, wherein the single site catalyst comprises a metallocene catalyst, preferably a supported metallocene catalyst.

Metallocenes are described in numerous patents. In the following just a few examples are listed; EP 260 130, WO 97/28170, WO 98/46616, WO 98/49208, WO 98/040331, WO 99/12981, WO 99/19335, WO 98/56831, WO 00/34341, WO00/148034, EP 423 101, EP 537 130, WO2002/02576, WO2005/105863, WO 2006097497, WO2007/116034, WO2007/107448, WO2009/027075, WO2009/054832, WO 2012/001052, and EP 2532687, the disclosures of which are incorporated herein by reference. Further, metallocenes are described widely in academic and scientific articles.

In a preferred embodiment the organometallic compound (C) has the following formula (Ia):

(L)₂RₙMX₂ (la)

wherein
"M" is Zr or Hf;
each "X" is a σ-ligand;
each "L" is an optionally substituted cyclopentadienyl, indenyl or tetrahydroindenyl;
"R" is SiMe₂ bridging group linking said organic ligands (L);
"n" is 0 or 1, preferably 1.

The metallocene catalyst complexes of the invention are preferably asymmetrical. Asymmetrical means simply that the two ligands forming the metallocene are different, that is, each ligand bears a set of substituents that are chemically different.

The metallocene catalyst complexes of the invention are typically chiral, racemic bridged bisindenyl *C*₁-symmetric metallocenes in their anti-configuration. Although such complexes are formally *C*₁-symmetric, the complexes ideally retain a pseudo-*C*₂-symmetry since they maintain *C*₂-symmetry in close proximity of the metal center although not at the ligand periphery. By nature of their chemistry both anti and syn enantiomer pairs (in case of *C*₁-symmetric complexes) are formed during the synthesis of the complexes. For the purpose of this invention, racemic-anti means that the two indenyl ligands are oriented in opposite directions with respect to the cyclopentadienyl-metal-cyclopentadienyl plane, while racemic-syn means that the two indenyl ligands are oriented in the same direction with respect to the cyclopentadienyl-metal-cyclopentadienyl plane, as shown in the scheme below.

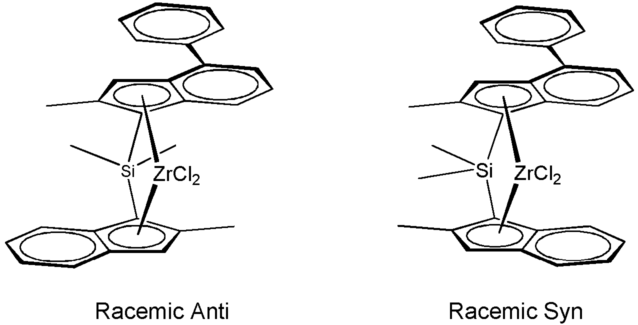

Formula (I), and any sub formulae, are intended to cover both syn- and anticonfigurations. Preferred metallocene catalyst complexes are in the anti configuration.

The metallocene catalyst complexes of the invention are generally employed as the racemic-anti isomers. Ideally, therefore at least 95%mol, e.g. at least 98%mol, especially at least 99%mol of the metallocene catalyst complex is in the racemic-anti isomeric form.

Thus, viewed from one aspect the metallocene complex may be of formula (II) 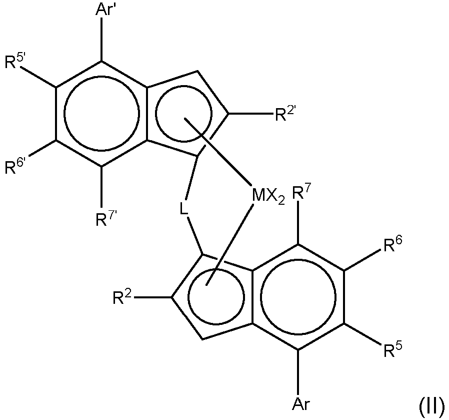 wherein
M is zirconium or hafnium;
each X is a sigma ligand;
L is a divalent bridge selected from -R'₂C-, -R'₂C-CR'₂-, -R'₂Si-, -R'₂Si-SiR'₂-, - R'₂Ge-, wherein each R' is independently a hydrogen atom, C₁-C₂₀-hydrocarbyl, tri(C₁-C₂₀-alkyl)silyl, C₆-C₂₀-aryl, C₇-C₂₀-arylalkyl or C₇-C₂₀-alkylaryl;
R² and R²' are each independently a C₁-C₂₀ hydrocarbyl radical optionally containing one or more heteroatoms from groups 14-16;
R⁵ and R^{5'} are each independently a C₁₋₂₀ hydrocarbyl group optionally containing one or more heteroatoms from groups 14-16 and optionally substituted by one or more halo atoms; R⁵ may also be hydrogen;
R⁶ and R^{6'} are each independently hydrogen or a C₁₋₂₀ hydrocarbyl group optionally containing one or more heteroatoms from groups 14-16;
R⁵ and R⁶ can be taken together to form a 5 membered saturated carbon ring which is optionally substituted by n groups R¹⁰, n being from 0 to 4;
R^{5'} ad R^{6'} can be taken together to form a 5 membered saturated carbon ring which is optionally substituted by n groups R¹⁰, n being from 0 to 4;
each R¹⁰ is the same or different and may be a C₁ to C₂₀ hydrocarbyl group, or a C1-C20 hydrocarbyl radical optionally containing one or more heteroatoms belonging to groups 14-16 of the periodic table of elements;
R⁷ and R^{7'} are each independently hydrogen or C₁₋₂₀ hydrocarbyl group optionally containing one or more heteroatoms from groups 14-16;
Ar is independently an aryl or heteroaryl group having up to 20 carbon atoms optionally substituted by one or more groups R¹;
Ar' is independently an aryl or heteroaryl group having up to 20 carbon atoms optionally substituted by one or more groups R¹;
each R¹ is a C₁₋₂₀ hydrocarbyl group or two R¹ groups on adjacent carbon atoms taken together can form a fused 5 or 6 membered non aromatic ring with the Ar group, said ring being itself optionally substituted with one or more groups R⁴; and
each R⁴ is a C₁₋₂₀ hydrocarbyl group.

Viewed from another aspect the metallocene complex may be of formula (II) 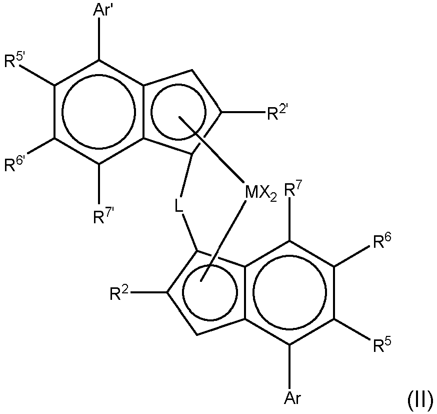 wherein
M is zirconium or hafnium;
each X is a sigma ligand;
L is a divalent bridge selected from -R'₂C-, -R'₂C-CR'₂-, -R'₂Si-, -R'₂Si-SiR'₂-, - R'₂Ge-, wherein each R' is independently a hydrogen atom, C₁-C₂₀-hydrocarbyl, tri(C₁-C₂₀-alkyl)silyl, C₀-C₂₀-aryl, C₇-C₂₀-arylalkyl or C₇-C₂₀-alkylaryl;
R² and R²' are each independently a C₁-C₂₀ hydrocarbyl radical optionally containing one or more heteroatoms from groups 14-16;
R⁵ and R^{5'} are each independently a C₁₋₂₀ hydrocarbyl group containing one or more heteroatoms from groups 14-16 optionally substituted by one or more halo atoms; R⁵ may also be hydrogen;
R⁶ and R^{6'} are each independently hydrogen or a C₁₋₂₀ hydrocarbyl group optionally containing one or more heteroatoms from groups 14-16;
R⁵ and R⁶ can be taken together to form a 5 membered saturated carbon ring which is optionally substituted by n groups R¹⁰, n being from 0 to 4;
R^{5'} and R^{6'} can be taken together to form a 5 membered saturated carbon ring which is optionally substituted by n groups R¹⁰, n being from 0 to 4;
each R¹⁰ is the same or different and may be a C₁ to C₂₀ hydrocarbyl group, or a C1-C20 hydrocarbyl radical optionally containing one or more heteroatoms belonging to groups 14-16 of the periodic table of elements;
R⁷ and R^{7'} are each independently hydrogen or C₁₋₂₀ hydrocarbyl group optionally containing one or more heteroatoms from groups 14-16;
Ar is independently an aryl or heteroaryl group having up to 20 carbon atoms optionally substituted by one or more groups R¹;
Ar' is independently an aryl or heteroaryl group having up to 20 carbon atoms optionally substituted by one or more groups R¹;
each R¹ is a C₁₋₂₀ hydrocarbyl group or two R¹ groups on adjacent carbon atoms taken together can form a fused 5 or 6 membered non aromatic ring with the Ar group, said ring being itself optionally substituted with one or more groups R⁴;
each R⁴ is a C₁₋₂₀ hydrocarbyl group;
In the catalyst complexes of the invention:
M is preferably Zr.
Each X, which may be the same or different, is preferably a hydrogen atom, a halogen atom, a R, OR, OSO₂CF₃, OCOR, SR, NR₂ or PR₂ group wherein R is a linear or branched, cyclic or acyclic, C₁₋₂₀ alkyl, C₂₋₂₀ alkenyl, C₂₋₂₀ alkynyl, C₆₋₂₀ aryl, C₇₋₂₀ alkylaryl or C₇₋₂₀ arylalkyl radical; optionally containing heteroatoms belonging to groups 14-16. R is preferably a C₁₋₆ alkyl, phenyl or benzyl group.
Most preferably each X is independently a hydrogen atom, a halogen atom, C₁₋₆ alkoxy group or an R group, e.g. preferably a C₁₋₆ alkyl, phenyl or benzyl group. Most preferably X is chlorine or a methyl radical. Preferably both X groups are the same.
L is preferably an alkylene linker or a bridge comprising a heteroatom, e.g. silicon or germanium, e.g. -SiR⁸₂-, wherein each R⁸ is independently C₁₋₂₀ alkyl, C₃₋₁₀ cycloakyl, C₆₋₂₀ aryl or tri(C₁₋₂₀ alkyl)silyl, e.g. trimethylsilyl. More preferably R³ is C₁₋₆ alkyl, especially methyl or C₃₋₇ cycloalkyl, e.g. cyclohexyl. Most preferably, L is a dimethylsilyl or a methylcyclohexylsilyl bridge (i.e. Me-Si-cyclohexyl). It may also be an ethylene bridge.
R² and R^{2'} can be different but they are preferably the same. R² and R^{2'} are preferably a C₁₋₁₀ hydrocarbyl group e.g. C₁₋₆ hydrocarbyl group. More preferably it is a linear or branched C₁₋₁₀ alkyl group. More preferably it is a linear or branched C₁₋₆ alkyl group, especially linear C₁₋₆ alkyl group e.g. methyl or ethyl.

The R² and R^{2'} groups can be interrupted by one or more heteroatoms, e.g. 1 or 2 heteroatoms, e.g. one heteroatom, selected from groups 14 to 16 of the periodic table. Such a heteroatom is preferably O, N or S, especially O. More preferably however the R² and R^{2'} groups are free from heteroatoms. Most especially R² and R^{2'} are methyl, especially both methyl.

The two Ar groups Ar and Ar' can be the same or different. It is preferred however if the Ar groups are different. The Ar' group may be unsubstituted. The Ar' is preferably a phenyl based group optionally substituted by groups R¹, especially an unsubstituted phenyl group.

The Ar group is preferably a C₆₋₂₀ aryl group e.g. a phenyl group or naphthyl group. Whilst the Ar group can be a heteroaryl group, e.g. carbazolyl, it is preferable that Ar is not a heteroaryl group. The Ar group can be unsubstituted or substituted by one or more groups R¹, more preferably by one or two R¹ groups, especially in position 4 of the aryl ring bound to the indenyl ligand or in the 3, 5-positions.

In one embodiment both Ar and Ar' are unsubstituted. In another embodiment Ar' is unsubstituted and Ar is substituted by one or two groups R¹.

R¹ is preferably a C₁₋₂₀ hydrocarbyl group, e.g. a C₁₋₂₀ alkyl group. R¹ groups can be the same or different, preferably the same. More preferably, R¹ is a C₂₋₁₀ alkyl group e.g. C₃₋₈ alkyl group. Highly preferred groups are tert butyl or isopropyl groups. It is preferred if the group R¹ is bulky, i.e. is branched. Branching might be alpha or beta to the ring. Branched C₃₋₈ alkyl groups are also favoured therefore.

In a further embodiment, two R¹ groups on adjacent carbon atoms taken together can form a fused 5 or 6 membered non aromatic ring with the Ar group, said ring being itself optionally substituted with one or more groups R⁴. Such a ring might form a tetrahydroindenyl group with the Ar ring or a tetrahydronaphthyl group.

If an R⁴ group is present, there is preferably only 1 such group. It is preferably a C₁₋₁₀ alkyl group.

It is preferred if there is one or two R¹ groups present on the Ar group. Where there is one R¹ group present, the group is preferably para to the indenyl ring (4-position). Where two R¹ groups are present these are preferably at the 3 and 5 positions.

R⁵ is preferably hydrogen or a C₁₋₂₀ hydrocarbyl group containing one or more heteroatoms from groups 14-16 and optionally substituted by one or more halo atoms or R⁵ is a C₁₋₁₀ alkyl group, e.g. methyl, but most preferably it is a group Z'R³.

R^{5'} is preferably a C₁₋₂₀ hydrocarbyl group containing one or more heteroatoms from groups 14-16 and optionally substituted by one or more halo atoms or R^{5'} is a C₁₋₁₀ alkyl group, e.g. methyl, but most preferably it is a group Z'R^{3'}.

R⁶ and R^{6'} may be the same or different. In one preferred embodiment one of R⁶ and R^{6'} is hydrogen, especially R⁶. It is preferred if R⁶ and R^{6'} are not both hydrogen. If not hydrogen, it is preferred if each R⁶ and R^{6'} is preferably a C₁₋₂₀ hydrocarbyl group, e.g. a C₁₋₂₀ alkyl group or C₆₋₁₀ aryl group. More preferably, R⁶ and R^{6'} are a C₂₋₁₀ alkyl group e.g. C₃₋₈ alkyl group. Highly preferred groups are tert-butyl groups. It is preferred if R⁶ and R^{6'} are bulky, i.e. are branched. Branching might be alpha or beta to the ring. Branched C₃₋₈ alkyl groups are also favoured therefore.

In another embodiment R⁵ and R⁶ can be taken together to form a 5 membered saturated carbon ring which is optionally substituted by n groups R¹⁰ , n being from 0 to 4, preferably 0 or 2 and more preferably 0; whereby each R¹⁰ can be the same or different and may be a C₁- C₂₀-hydrocarbyl group, or a C₁-C₂₀ hydrocarbyl radical optionally containing one or more heteroatoms belonging to groups 14-16 of the periodic table of elements; preferably a linear or branched C₁-C₆ -alkyl group.

The R⁷ and R^{7'} groups can be the same or different. Each R⁷ and R^{7'} group is preferably hydrogen, a C₁₋₆ alkyl group or is a group ZR³. It is preferred if R^{7'} is hydrogen. It is preferred if R⁷ is hydrogen, C₁₋₆ alkyl or ZR³. The combination of both R⁷ and R^{7'} being hydrogen is most preferred.

Z and Z' are O or S, preferably O.

R³ is preferably a C₁₋₁₀ hydrocarbyl group, especially a C₁₋₁₀ alkyl group, or aryl group optionally substituted by one or more halo groups. Most especially R³ is a C₁₋₆ alkyl group, e.g. a linear C₁₋₆ alkyl group, e.g. methyl or ethyl

R^{3'} is preferably a C₁₋₁₀ hydrocarbyl group, especially a C₁₋₁₀ alkyl group, or aryl group optionally substituted by one or more halo groups. Most especially R^{3'} is a C₁₋₆ alkyl group, e.g. a linear C₁₋₆ alkyl group, e.g. methyl or ethyl or it is a phenyl based radical optionally substituted with one or more halo groups e.g. Ph or C₆F₅.

Thus, preferred metallocene complexes are of formula (III) 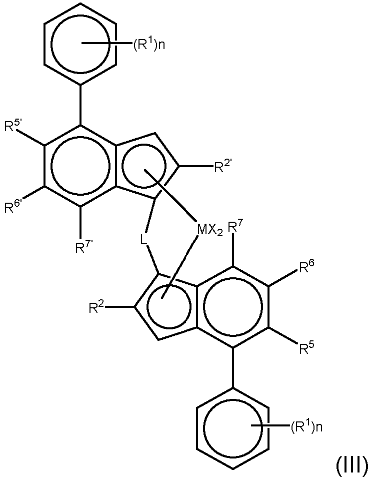 wherein
M is zirconium or hafnium;
each X is a sigma ligand, preferably each X is independently a hydrogen atom, a halogen atom, C₁₋₆ alkoxy group, C₁₋₆ alkyl, phenyl or benzyl group;
L is a divalent bridge selected from -R'₂C-, -R'₂C-CR'₂-, -R'₂Si-, -R'₂Si-SiR'₂-, - R'₂Ge-, wherein each R' is independently a hydrogen atom, C₁₋₂₀ alkyl, C₃₋₁₀ cycloalkyl, tri(C₁₋₂₀-alkyl)silyl, C₀₋₂₀-aryl, C₇₋₂₀ arylalkyl or C₇₋₂₀ alkylaryl;
each R² or R^{2'} is a C₁₋₁₀ alkyl group;
R⁵ is hydrogen and R⁶ is hydrogen or a C₁₋₁₀ alkyl group; or R⁵ and R⁶ can be taken together to form a 5 membered saturated carbon ring;
R^{5'} is a C₁₋₁₀ alkyl group or Z'R^{3'} group;
R^{6'} is a C₁₋₁₀ alkyl group or C₆₋₁₀ aryl group;
R⁷ is hydrogen, a C₁₋₆ alkyl group or ZR³ group;
R^{7'} is hydrogen or a C₁₋₁₀ alkyl group;
Z and Z' are independently O or S;
R^{3'} is a C₁₋₁₀ alkyl group, or a C₆₋₁₀ aryl group optionally substituted by one or more halo groups;
R³ is a C₁₋₁₀-alkyl group;
n is 0 to 4, e.g. 0, 1 or 2;
and each R¹ is a C₁₋₂₀ hydrocarbyl group, e.g. C₁₋₁₀ alkyl group.

Viewed from another aspect the metallocene complex may be of formula (IV): 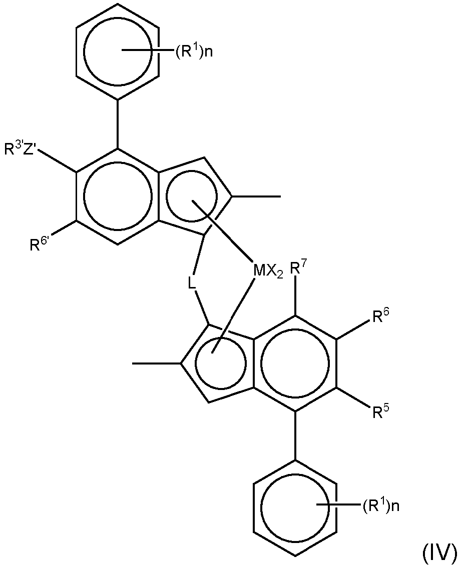
M is zirconium or hafnium;
each X is a sigma ligand, preferably each X is independently a hydrogen atom, a halogen atom, C₁₋₆ alkoxy group, C₁₋₆ alkyl, phenyl or benzyl group;
L is a divalent bridge selected from -R'₂C- or -R'₂Si- wherein each R' is independently a hydrogen atom, C₁₋₂₀ alkyl or C₃₋₁₀ cycloalkyl;
R⁶ is hydrogen and R⁶ is hydrogen or a C₁₋₁₀ alkyl group; or R⁶ and R⁶ can be taken together to form a 5 membered saturated carbon ring;
R^{6'} is a C₁₋₁₀ alkyl group or C₆₋₁₀ aryl group;
R⁷ is C₁₋₆ alkyl or OC₁₋₆ alkyl;
Z' is O or S;
R^{3'} is a C₁₋₁₀ alkyl group, or C₆₋₁₀ aryl group optionally substituted by one or more halo groups;
n is 0 to 4, e.g. 0, 1 or 2; and
each R' is a C₁₋₁₀ alkyl group.

Viewed from a further preferred aspect the metallocene complex may be of formula (V): 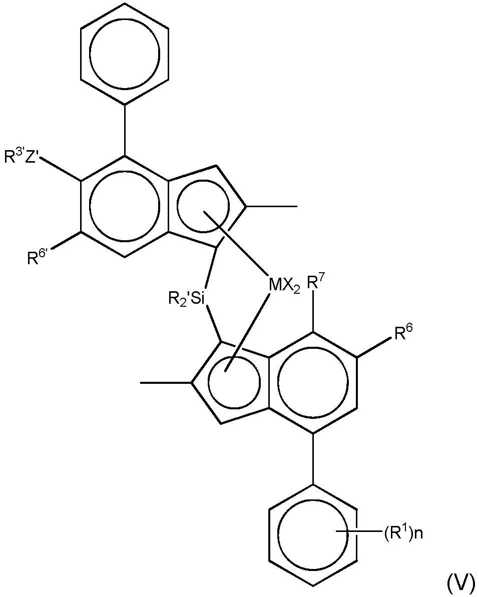
M is zirconium or hafnium;
each X is a sigma ligand, preferably each X is independently a hydrogen atom, a halogen atom, C₁₋₆-alkoxy group, C₁₋₆-alkyl, phenyl or benzyl group;
each R' is independently a hydrogen atom, C₁₋₂₀ alkyl or C₃₋₇ cycloalkyl;
R⁶ is hydrogen or a C₁₋₁₀ alkyl group;
R^{6'} is a C₁₋₁₀ alkyl group or C₆₋₁₀ aryl group;
R⁷ is C₁₋₆ alkyl or OC₁₋₆ alkyl;
Z' is O or S;
R^{3'} is a C₁₋₁₀ alkyl group, or C₆₋₁₀ aryl group optionally substituted by one or more halo groups;
n is 0, 1 to 2; and
each R¹ is a C₃₋₈ alkyl group.
Most especially, the metallocene complex may be of formula (VI) 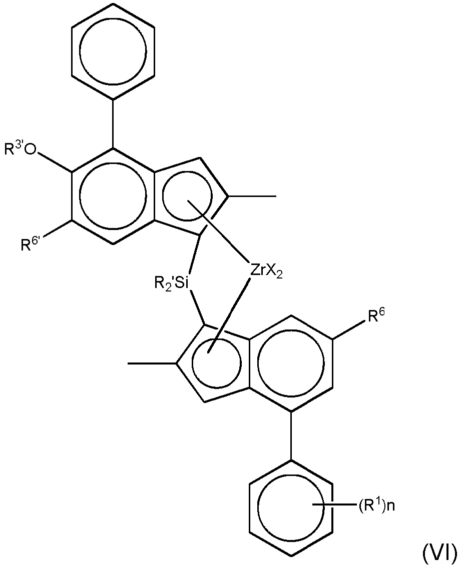
wherein each X is a sigma ligand, preferably each X is independently a hydrogen atom, a halogen atom, C₁₋₆-alkoxy group, C₁₋₆-alkyl, phenyl or benzyl group;
R' is independently a C₁₋₆ alkyl or C₃₋₁₀ cycloalkyl;
R¹ is C₃₋₈ alkyl;
R⁶ is hydrogen or a C₃₋₈ alkyl group;
R^{6'} is a C₃₋₈ alkyl group or C₆₋₁₀ aryl group;
R^{3'} is a C₁₋₆ alkyl group, or C₆₋₁₀ aryl group optionally substituted by one or more halo groups; and
n is 0, 1 or 2.

Particular metallocene catalyst complexes suitable for use in the invention include:

| | | | |
|---|---|---|---|
| 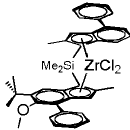 | 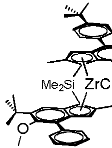 | 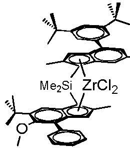 | 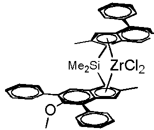 |
| rac-anti-Me₂Si(2-Me-4-Ph-6-*t*Bu-Ind)(2-Me-4-Ph-5-OMe-6-*t*Bu-Ind)ZrCl₂ | rac-anti-Me₂Si(2-Me-4-(p-*t*BuPh)-Ind)(2-Me-4-Ph-5-OMe-6-*t*Bu-Ind)ZrCl₂ | rac-anti-Me₂Si(2-Me-4-(3,5-di-*t*BuPh)-6-*t*Bu-Ind)(2-Me-4-Ph-5-OMe-6-tBu-Ind)ZrCl₂ | rac-anti-Me₂Si(2-Me-4-Ph-6-*t*Bu-Ind)(2-Me-4,6-di-Ph-5-OMe-Ind)ZrCl₂ |

| | | | |
|---|---|---|---|
| 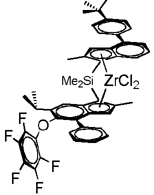 | 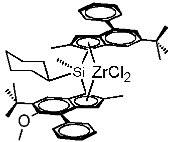 | 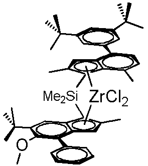 | 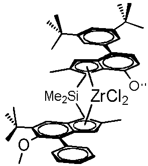 |
| rac-anti-Me₂Si(2-Me-4-(p-tBuPh)-Ind)(2-Me-4-Ph-5-OC₆F₅)-6-*i*Pr-Ind)ZrCl₂ | rac-anti-Me(CyHex)Si(2-Me-4-Ph-6-*t*Bu-Ind)(2-Me-4-Ph-5-OMe-6-*t*Bu-Ind)ZrCl₂ | rac-anti-Me₂Si(2-Me-4-(3,5-di-*t*BuPh)-7-Me-Ind)(2-Me-4-Ph-5-OMe-6-*t*Bu-Ind)ZrCl₂ | rac-anti-Me₂Si(2-Me-4-(3,5-di-*t*BuPh)-7-OMe-Ind)(2-Me-4-Ph-5-OMe-6-*t*Bu-Ind)ZrCl₂ |

Throughout the disclosure above, where a narrower definition of a substituent is presented, that narrower definition is deemed disclosed in conjunction with all broader and narrower definitions of other substituents in the application.

### Catalyst Ligand Synthesis

The ligands required to form the single site catalysts of the invention can be synthesised by any process and the skilled organic chemist would be able to devise various synthetic protocols for the manufacture of the necessary ligand materials. WO2013/007650, for example, discloses the necessary chemistry. Synthetic protocols can also generally be found in WO2002/02576, WO2011/135004, WO2012/084961, WO2012/001052, WO2011/076780 and WO2015/158790.

To form an active single site catalytic species it is normally necessary to employ a cocatalyst as is well known in the art. According to the present invention a cocatalyst system comprising a boron containing cocatalyst and/or an aluminoxane cocatalyst is used in combination with the above defined metallocene catalyst complex.

The aluminoxane cocatalyst can be one of formula (X): 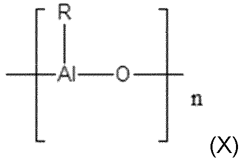 where n is usually from 6 to 20 and R has the meaning below.

Aluminoxanes are formed on partial hydrolysis of organoaluminum compounds, for example those of the formula AlR₃, AlR₂Y and Al₂R₃Y₃ where R can be, for example, C₁-C₁₀ alkyl, preferably C₁-C₅ alkyl, or C₃₋₁₀ cycloalkyl, C₇-C₁₂ arylalkyl or alkylaryl and/or phenyl or naphthyl, and where Y can be hydrogen, halogen, preferably chlorine or bromine, or C1-C10 alkoxy, preferably methoxy or ethoxy. The resulting oxygen-containing aluminoxanes are not in general pure compounds but mixtures of oligomers of the formula (X).

The preferred aluminoxane is methylaluminoxane (MAO). Since the aluminoxanes used according to the invention as cocatalysts are not, owing to their mode of preparation, pure compounds, the molarity of aluminoxane solutions hereinafter is based on their aluminium content.

According to the present invention, also a boron containing cocatalyst can be used instead of the aluminoxane cocatalyst or the aluminoxane cocatalyst can be used in combination with a boron containing cocatalyst.

When a borate cocatalyst is used, the metallocene catalyst complex is in its alkylated version, that is for example a dimethyl or dibenzyl metallocene catalyst complex can be used.

Boron based cocatalysts of interest include those of formula (Z)

BY₃ (Z),

wherein Y is the same or different and is a hydrogen atom, an alkyl group of from 1 to about 20 carbon atoms, an aryl group of from 6 to about 15 carbon atoms, alkylaryl, arylalkyl, haloalkyl or haloaryl each having from 1 to 10 carbon atoms in the alkyl radical and from 6-20 carbon atoms in the aryl radical or fluorine, chlorine, bromine or iodine. Preferred examples for Y are methyl, propyl, isopropyl, isobutyl or trifluoromethyl, unsaturated groups e.g. aryl or haloaryl like phenyl, tolyl, benzyl groups, p-fluorophenyl, 3,5- difluorophenyl, pentachlorophenyl, pentafluorophenyl, 3,4,5-trifluorophenyl and 3,5- di(trifluoromethyl)phenyl.

Preferred options are trifluoroborane, triphenylborane, tris(4-fluorophenyl)borane, tris(3,5-difluorophenyl)borane, tris(4-fluoromethylphenyl)borane, tris(2,4,6-trifluorophenyl)borane, tris(penta-fluorophenyl)borane, tris(tolyl)borane, tris(3,5-dimethyl-phenyl)borane, tris(3,5-difluorophenyl)borane and/or tris (3,4,5-trifluorophenyl)borane.

Particular preference is given to tris(pentafluorophenyl)borane.

However, it is preferred that borates are used, i.e. compounds containing a borate 3+ ion. Such ionic cocatalysts preferably contain a non-coordinating anion e.g. tetrakis(pentafluorophenyl)borate and tetraphenylborate. Suitable counterions are protonated amine or aniline derivatives e.g. methylammonium, anilinium, dimethylammonium, diethylammonium, N- methylanilinium, diphenylammonium, N,N-dimethylanilinium, trimethylammonium, triethylammonium, tri-n-butylammonium, methyldiphenylammonium, pyridinium, p-bromo-N,N- dimethylanilinium or p-nitro-N, N-dimethylanilinium.

Preferred ionic compounds which can be used according to the present invention include: triethylammoniumtetra(phenyl)borate, tributylammoniumtetra(phenyl)borate, trimethylammoniumtetra(tolyl)borate, tributylammoniumtetra(tolyl)borate, tributylammoniumtetra(pentafluorophenyl)borate, tripropylammoniumtetra(dimethylphenyl)borate, tributylammoniumtetra(trifluoromethylphenyl)borate, tributylammoniumtetra(4-fluorophenyl)borate, N,N-dimethylcyclohexylammoniumtetrakis(pentafluorophenyl)borate, N,N-dimethylbenzylammoniumtetrakis(pentafluorophenyl)borate, N,N-dimethylaniliniumtetra(phenyl)borate, N,N-diethylaniliniumtetra(phenyl)borate, N,N-dimethylaniliniumtetrakis(pentafluorophenyl)borate, N,N-di(propyl)ammoniumtetrakis(pentafluorophenyl)borate, di(cyclohexyl)ammoniumtetrakist(pentafluorophenyl)borate, triphenylphosphoniumtetrakis(phenyl)borate, triethylphosphoniumtetrakis(phenyl)borate, diphenylphosphoniumtetrakis(phenyl)borate, tri(methylphenyl)phosphoniumtetrakis(phenyl)borate, tri(dimethylphenyl)phosphoniumtetrakis(phenyl)borate, triphenylcarbeniumtetrakis(pentafluorophenyl)borate, or ferroceniumtetrakis(pentafluorophenyl)borate.

Preference is given to triphenylcarbeniumtetrakis(pentafluorophenyl) borate, N,N-dimethylcyclohexylammoniumtetrakis(pentafluorophenyl)borate or N,N-dimethylbenzylammoniumtetrakis(pentafluorophenyl)borate.

It has been surprisingly found that certain boron cocatalysts are especially preferred. Preferred borates of use in the invention therefore comprise the trityl ion. Thus the use of N,N-dimethylammonium-tetrakispentafluorophenylborate and Ph₃CB(PhF₅)₄ and analogues therefore are especially favoured.

In a preferred embodiment of the invention, the metallocene catalyst is used in combination with a boron containing cocatalyst and/or an aluminoxane cocatalyst.

According to the present invention, the preferred cocatalysts are alumoxanes, more preferably methylalumoxanes, combinations of alumoxanes with Al-alkyls, boron or borate cocatalysts and combination of alumoxanes with boron-based cocatalysts.

According to the most preferred embodiment of present invention, the preferred cocatalysts are alumoxanes, most preferably methylalumoxanes.

Suitable amounts of cocatalyst will be well known to the skilled person. The molar ratio of boron to the metal ion of the metallocene may be in the range 0.5:1 to 10:1 mol/mol, preferably 1:1 to 10:1, especially 1:1 to 5:1 mol/mol.

The molar ratio of Al in the aluminoxane to the metal ion of the metallocene may be in the range 1:1 to 2000:1 mol/mol, preferably 10:1 to 1000:1, and more preferably 50:1 to 500:1 mol/mol.

### Catalyst Manufacture

The single site (preferably metallocene) catalyst complex can be used in supported or unsupported form. The particulate support material used is preferably an organic or inorganic material, e.g. silica, alumina or zirconia or a mixed oxide e.g. silica-alumina, in particular silica, alumina or silica-alumina. The use of a silica support is preferred. The skilled person is aware of the procedures required to support such a catalyst.

Especially preferably the support is a porous material so that the complex may be loaded into the pores of the support, e.g. using a process analogous to those described in WO94/14856, WO95/12622 and WO2006/097497. The particle size is not critical but is preferably in the range 5 to 200 µm, more preferably 20 to 80 µm. The use of these supports is routine in the art.

In an alternative embodiment, no support is used at all. Such a catalyst can be prepared in solution, for example in an aromatic solvent like toluene, by contacting the metallocene (as a solid or as a solution) with the cocatalyst, for example methylaluminoxane or a borane or a borate salt previously dissolved in an aromatic solvent, or can be prepared by sequentially adding the dissolved catalyst components to the polymerisation medium.

In one embodiment, no external carrier is used but the catalyst is still presented in solid particulate form. Thus, no external support material, e.g. inert organic or inorganic carrier, for example silica as described above is employed.

In order to provide the catalyst of the invention in solid form but without using an external carrier, it is preferred if a liquid/liquid emulsion system is used. The process involves forming dispersing catalyst components (i) (the complex) and (ii) (the cocatalyst) in a solvent, and solidifying said dispersed droplets to form solid particles.

In particular, the method involves preparing a solution of one or more catalyst components; dispersing said solution in a solvent to form an emulsion in which said one or more catalyst components are present in the droplets of the dispersed phase; immobilising the catalyst components in the dispersed droplets, in the absence of an external particulate porous support, to form solid particles comprising the said catalyst, and optionally recovering said particles.

This process enables the manufacture of active catalyst particles with improved morphology, e.g. with a predetermined spherical shape, surface properties and particle size and without using any added external porous support material, e.g. an inorganic oxide, e.g. silica. By the term "preparing a solution of one or more catalyst components" is meant that the catalyst forming compounds may be combined in one solution, which is dispersed to the immiscible solvent, or, alternatively, at least two separate catalyst solutions for each part of the catalyst forming compounds may be prepared, which are then dispersed successively to the solvent. Full disclosure of the necessary process can be found in WO03/051934.

As noted above, the key to the invention is not the specific nature of the single site catalyst used and hence this may be chosen broadly however it is required that the second polymerisation process, i.e. the gas phase polymerisation, can be effected in the presence of the aluminium alkyl compound.

### Definitions

Heterophasic polypropylene (HECO PP) is a propylene copolymer that comprises a rubber component within the polypropylene matrix polymer.

A continuous process is a process in which the polymerisation of the olefin monomer (e.g., propylene) occurs without interruption. In such a process, raw materials are continuously fed into the system, and polymer products are continuously removed, resulting in a steady state of operation throughout the production cycle.

By free from an external carrier is meant that the catalyst does not contain an external support, e.g. an inorganic support, for example, silica or alumina, or an organic polymeric support material.

The term C₁₋₂₀ hydrocarbyl group includes C₁₋₂₀ alkyl, C₂₋₂₀ alkenyl, C₂₋₂₀ alkynyl, C₃₋₂₀ cycloalkyl, C₃₋₂₀ cycloalkenyl, C₆₋₂₀ aryl groups, C₇₋₂₀ alkylaryl groups or C₇₋₂₀ arylalkyl groups or of course mixtures of these groups e.g. cycloalkyl substituted by alkyl. Linear and branched hydrocarbyl groups cannot contain cyclic units. Aliphatic hydrocarbyl groups cannot contain aryl rings.

Unless otherwise stated, preferred C₁₋₂₀ hydrocarbyl groups are C₁₋₂₀ alkyl, C₄₋₂₀ cycloalkyl, C₅₋₂₀ cycloalkyl-alkyl groups, C₇₋₂₀ alkylaryl groups, C₇₋₂₀ arylalkyl groups or C₆₋₂₀ aryl groups, especially C₁₋₁₀ alkyl groups, C₆₋₁₀ aryl groups, or C₇₋₁₂ arylalkyl groups, e.g. C₁₋₈ alkyl groups. Most especially preferred hydrocarbyl groups are methyl, ethyl, propyl, isopropyl, tertbutyl, isobutyl, C₅₋₆-cycloalkyl, cyclohexylmethyl, phenyl or benzyl.

The term halo includes fluoro, chloro, bromo and iodo groups, especially chloro groups, when relating to the complex definition.

The oxidation state of the metal ion is governed primarily by the nature of the metal ion in question and the stability of the individual oxidation states of each metal ion.

It will be appreciated that in the metal complexes described herein, the metal ion M is coordinated by ligands X so as to satisfy the valency of the metal ion and to fill its available coordination sites. The nature of these σ-ligands can vary greatly.

Catalyst activity is defined in this application to be the amount of polymer produced/g catalyst/h. Catalyst metal activity is defined here to be the amount of polymer produced/g Metal/h. The term productivity is also sometimes used to indicate the catalyst activity although herein it designates the amount of polymer produced per unit weight of catalyst.

As it is well known in the art the average residence time τ can be calculated from Equation 1 below: $τ = \frac{{V}_{R}}{{Q}_{o}}$ Equation 1: residence time where V_{R} is the volume of the reaction space (in case of a loop reactor, the volume of the reactor, in case of the fluidized bed reactor, the volume of the fluidized bed) and Qₒ is the volumetric flow rate of the product stream (including the polymer product and the fluid reaction mixture).

### Determination Methods

The following definitions of terms and determination methods apply for the above general description of the invention as well as to the below examples unless otherwise defined.

**Melt flow rate (MFR₂)** is measured according to ISO 1133. For propylene, conditions are 230 °C and 2.16 kg load. For polyethylene, conditions are 190 °C and 2.16 kg load.

**Bulk Density:** The bulk density of the polymer powder was determined according to ASTM D1895-24.

**Number average molecular weight (Mₙ), weight average molecular weight (M_{w}) and molecular weight distribution (MWD)** are determined by Gel Permeation Chromatography (GPC) according to the following method:
The weight average molecular weight Mw and the molecular weight distribution (MWD = Mw/Mn wherein Mn is the number average molecular weight and Mw is the weight average molecular weight) is measured by a method based on ISO 16014-1:2003 and ISO 16014-4:2003. A Waters Alliance GPCV 2000 instrument, equipped with refractive index detector and online viscosimeter was used with 3 x TSK-gel columns (GMHXL-HT) from TosoHaas and 1,2,4-trichlorobenzene (TCB, stabilized with 200 mg/L 2,6-Di tert butyl-4-methyl-phenol) as solvent at 145 °C and at a constant flow rate of 1 mL/min. 216.5 µL of sample solution were injected per analysis. The column set was calibrated using relative calibration with 19 narrow MWD polystyrene (PS) standards in the range of 0.5 kg/mol to 11 500 kg/mol and a set of well characterised broad polypropylene standards. All samples were prepared by dissolving 5 - 10 mg of polymer in 10 mL (at 160 °C) of stabilized TCB (same as mobile phase) and keeping for 3 hours with continuous shaking prior sampling in into the GPC instrument.

**Particle size (PS) and Average Particle Size (APS)** were measured according to ISO 13322-2 using Image analysis methods using a Camsizer P4 analyser.

**Comonomer content** was determined in a known manner based on Fourier transform infrared spectroscopy (FTIR) determination using Nicolet Magna 550 IR spectrometer together with Nicolet Omnic FTIR software calibrated with ¹³C-NMR.

### DSC analysis

Melting temperature Tm and crystallization temperature Tcr was measured on approx. 5 mg samples with a Mettler-Toledo 822e differential scanning calorimeter (DSC), according to ISO11357-3 in a heat/cool/heat cycle with a scan rate of 10 °C/min in the temperature range of +23 to +225 °C under a nitrogen flow rate of 50 ml min-1. Melting temperature was taken as the endotherm peak, respectively in the second heating step. Calibration of the instrument was performed with H20, Lead, Tin, Indium, according to ISO 11357-1.

### Xylene solubles

The xylene soluble fraction (XS) as defined and described in the present invention was determined as follows: 2.0 g of the polymer were dissolved in 250 mm p-xylene at 135 °C under agitation. After 30 minutes, the solution was allowed to cool for 15 minutes at ambient temperature and then allowed to settle for 30 minutes at 25 ± 0.5 °C. The solution was filtered with filter paper into two 100 mm flasks. The solution from the first 100 mm vessel was evaporated in nitrogen flow and the residue dried under vacuum at 90 °C until constant weight is reached. The xylene soluble fraction (percent) can then be determined as follows: $XS % = \left(100 x {m}_{1} X {v}_{0}\right) / \left({m}_{0} x {v}_{1}\right) ,$ wherein m₀ designates the initial polymer amount (grams), m₁ defines the weight of residue (grams), v₀ defines the initial volume (milliliter) and v₁ defines the volume of the analysed sample (milliliter).

**Gel index:** The optical gel index was measured with an OCS gel counting apparatus consisting of a measuring extruder, attached to this were a chill roll unit, a heating and cooling unit (Haake C40P with a temperature range of 15-90 °C), a line camera (FS-5/4096 pixel for dynamic digital processing of grey tone images) and a winding unit (with automatic drawing control up to 10 N). The details of film production is listed below session.

For each material, the average number of gel dots on a film surface of 5 m2 was detected by the line camera. The line camera was set to differentiate the gel dot size according to the following table:

| Gel dot size | Calculating Factor |
|---|---|
| up to 300 µm | x 0.1 |
| up to 600 µm | x 1.0 |
| up to 1000 µm | x 5.0 |
| > 1000 µm | x 10.0 |

The number of gel dots detected for each size was multiplied with its respective calculating factor. The sum of all those values gave one final value, which is called the optical gel index.

**Production Split:** The polymer production split for any given reactor or set of reactors is provided as a percentage of the total polymer production.

The polymer production split in the second reactor (SR), e.g. a gas phase reactor, can be calculated using the following formula: $Split - SR% = \frac{{Pr}_{SR}}{{Pr}_{total}} \times 100$

Where:
- Pr_{SR} = polymer production rate in the second reactor (tn SR polymer/hour)
- Prₜₒₜₐₗ = total polymer withdrawal rate from the second reactor (tn total polymer/hour)

An alternative way to calculate the production split for the second reactor is by subtracting the polymer production rate in the first reactor (Pr_{FR}), e.g. a loop reactor, from the total polymer withdrawal rate in the second reactor (Prₜₒₜₐₗ), then dividing by the total polymer withdrawal rate from the second reactor: $Split - SR% = \frac{\left({Pr}_{total}-{Pr}_{FR}\right)}{{Pr}_{total}} \times 100$

Where:
- Pr_{FR} = Polymer production rate in the first reactor (tn FR polymer/hour)

The production split in the first reactor (FR), e.g. a loop reactor, can be calculated by dividing the polymer production rate in the first reactor (Pr_{FR}) by the total polymer withdrawal rate from the second reactor (Prₜₒₜₐₗ): $Split - FR% = \frac{{Pr}_{FR}}{{Pr}_{total}} \times 100$

Where:
- Pr_{FR} = Polymer production rate in the first reactor (tons FR polymer/hour)

**Prepolymerisation Production Rate:** The prepolymerisation production rate can be determined based on the energy balance of the prepolymerisation reactor. Specifically, it can be calculated from the prepolymerisation reaction heat, which is derived from the temperature difference (ΔT) between the cooling water entering and exiting the prepolymerisation reactor. This method of determining the production rate based on the reactor's energy balance would be well understood by the person skilled in the art.

### Examples

In the examples, these abbreviations have the following meanings:
- MAO: Methylaluminoxane
- APS: Average particle size
- AM: Amorphous phase
- IV/XS: Intrinsic viscosity / Xylene soluble fraction
- PS: Particle size
- Tm: Melting temperature
- Tcr: Crystallization temperature
- PP: Polypropylene

### Catalyst

The single-site catalyst used in the polymerisation process for all examples was *Anti*dimethylsilylene[2-methyl-4-phenyl-5-methoxy-6-*tert*-butyl-indenyl)(2-methyl-4-phenyl-6-*tert-*butylindenyl) zirconium dichloride as disclosed in WO 2013/007650 A1 as metallocene E1.

The catalyst was SiO₂/MAO/borate supported.

### HECO PP

A multi-stage PP polymerization, mimicking Borstar PP process conditions, was carried out on the pilot scale as per the conditions provided in Table 1. A three-reactor process set up was used. The aim of the polymerization was to produce heterophasic polypropylene having final MFR of 2-3 g/10 min and an XS content of about 15% and IV/XS about 200-250 mL/g.

In Examples 1-3 (IE01-IE03) a high amounts of aluminium alkyl were introduced into the prepolymerisation reactor. In Comparative Example 1 a low amount of aluminium alkyl was introduced into the prepolymerisation reactor.

For the absence of doubt, the TEAL feed in g/kg C3 is grams of TEAL introduced into the prepolymerisation reactor per kilogram of propylene introduced into the prepolymerisation reactor and loop reactor.

**Table 1**

| **Prepolymerisation reactor** | **CE01** | **IE01** | **IE02** | **E03** |
|---|---|---|---|---|
| Temp. (°C) | 20 | 20 | 20 | 20 |
| Press. (kPa) | 5427 | 5389 | 5399 | 5428 |
| Catalyst feed (g/h) | 3.70 | 1.90 | 1.94 | 1.89 |
| TEAL feed (g/kg C3) | 0.003 | 0.061 | 0.061 | 0.061 |
| Feed H2/C3 ratio (mol/kmol) | 0.04 | 0.03 | 0.03 | 0.03 |
| Residence time (h) | 0.34 | 0.30 | 0.30 | 0.30 |
| Productivity (g PP/g cat) | 428 | 762 | 712 | 678 |

| **Loop reactor, 1st polymerisation step** | | | | |
|---|---|---|---|---|
| Temp. (°C) | 65 | 65 | 65 | 65 |
| Press. (kPa) | 5425 | 5378 | 5391 | 5412 |
| Feed H2/C3 ratio (mol/kmol) | 0.05 | 0.10 | 0.10 | 0.10 |
| Polymer Split (loop + prepolymerisation reactor, %) | 51.5 | 52 | 51.5 | 51 |
| Polymer residence time (h) | 0.42 | 0.42 | 0.41 | 0.42 |
| MFR2 (g/10 min) | 1.13 | 3.57 | 4.51 | 3.00 |
| XS (wt-%) | 0.93 | 0.56 | na | na |
| APS (mm) | 0.856 | 0.952 | na | na |
| Bulk Density (kg/m3) | 365 | 345 | na | na |

| **1st Gas phase reactor, 2nd polymerisation step** | | | | |
|---|---|---|---|---|
| Temp. (°C) | 80 | 80 | 80 | 80 |
| Press. (kPa) | 2400 | 2400 | 2400 | 2400 |
| H2/C3 ratio (mol/kmol) | 1.70 | 1.50 | 1.86 | 1.91 |
| Polymer Split (%) | 41.5 | 28 | 31.5 | 31 |
| Residence time (h) | 1.50 | 1.70 | 1.70 | 1.70 |
| MFR2 (g/10 min) | 1.90 | 2.43 | 2.62 | 2.90 |
| XS (wt-%) | 0.90 | 0.32 | na | na |
| Bulk Density (kg/m3) | 362 | 316 | na | na |

| **Gas phase reactor 2, 3rd polymerisation step** | | | | |
|---|---|---|---|---|
| Temp. (°C) | 70 | 70 | 68 | 68 |
| Press. (kPa) | 2500 | 2500 | 2500 | 2500 |
| H2/C3 ratio (mol/kmol) | 1.85 | 1.88 | 1.82 | 1.85 |
| H2/C2 ratio (mol/kmol) | 2.19 | 2.13 | 2.04 | 2.06 |
| C2/C3 ratio (mol/kmol) | 847 | 881 | 890 | 896 |
| Residence time (h) | 1.50 | 0.60 | 0.60 | 0.60 |
| Polymer Split (%) | 7 | 20 | 17 | 18 |

| **After reactors** | | | | |
|---|---|---|---|---|
| Total Production rate from Silo(kg/h) | 65 | 63 | 65 | 68 |
| Total productivity (kg PP/g cat) | 17.6 | 33.2 | 33.4 | 36.0 |

| **Final PP powder** | | | | |
|---|---|---|---|---|
| MFR2 (g/10 min) | 1.72 | 1.79 | 2.39 | 2.2 |
| XS (wt-%) | 6.9 | 19.9 | 14.6 | 18.1 |
| C2 (wt-%) | 0.91 | 2.9 | 3.0 | 3.6 |
| C2/XS (wt-%) | 30 | 25 | 29 | 23.5 |
| IV/XS (ml/g) | 192 | 235 | 237 | 246 |
| Bulk Density (kg/m3) | 413 | 335 | 353 | 326 |
| PS < 0,106 mm | 0.01 | 0 | 0 | 0.01 |
| PS > 0,106 mm | 0.53 | 0.17 | 0.23 | 0.15 |
| PS > 0,250 mm | 1.86 | 0.83 | 1.11 | 0.73 |
| PS > 0,355 mm | 45.91 | 26.28 | 29.76 | 28.77 |
| PS > 0,850 mm | 51.01 | 68.99 | 66.41 | 68.27 |
| PS > 2,0 mm | 0.68 | 3.71 | 2.49 | 2.07 |
| PS > 4,0 mm | 0 | 0.02 | 0 | 0 |
| APS (mm) | 1.03 | 1.26 | 1.20 | 1.21 |

| **Final PP pellet** | | | | |
|---|---|---|---|---|
| MFR2 (g/10 min) | 1.85 | 1.80 | 2.34 | 2.23 |
| Tm (°C) | 155.0 | 156.7 | 156.6 | 156.9 |
| Tcr (°C) | 124.0 | 124.8 | 125.7 | 125.0 |

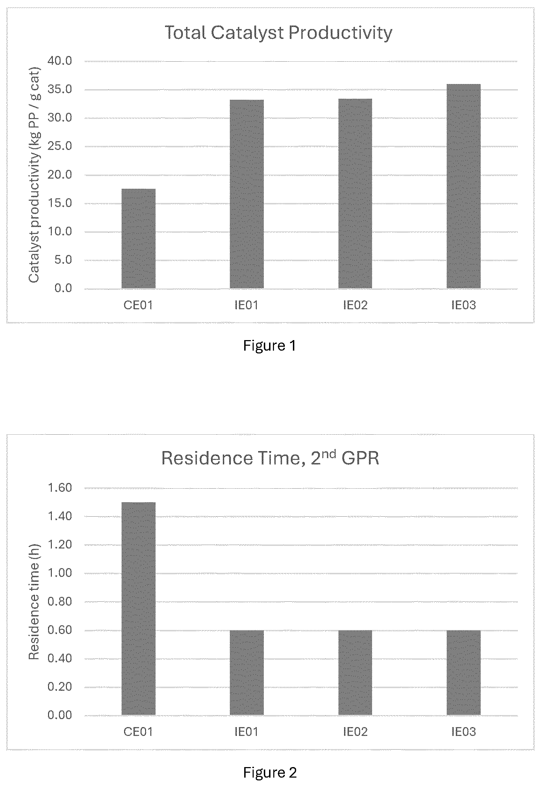

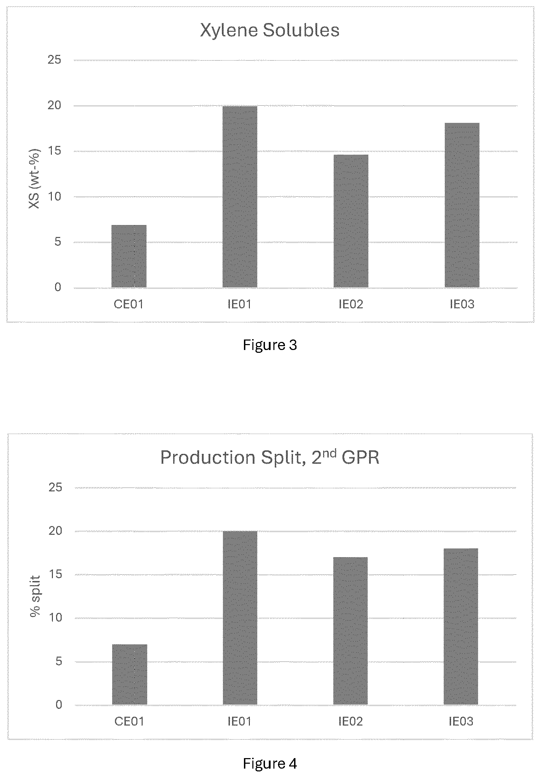

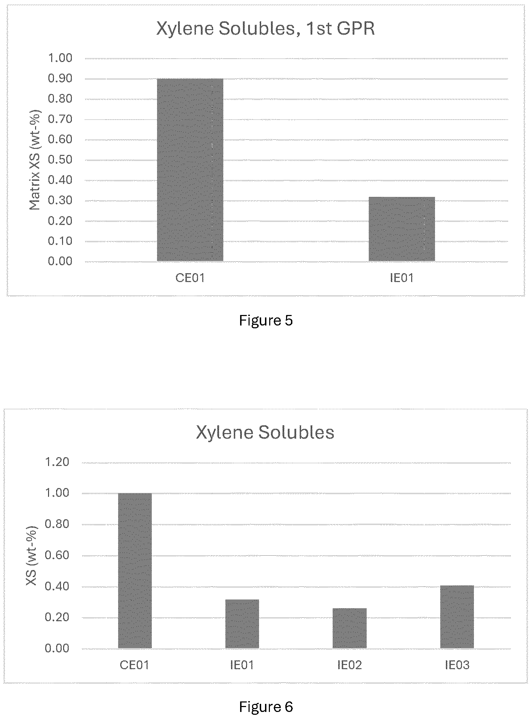

Certain measured values in this table are shown in bar charts (Figures 1 to 5). Figure 1 shows an improvement in the total productivity of the catalyst in IE01-IE03 compared to CE01. Figure 2 shows the residence time in the 2^{nd} GPR. Collectively, Figures 1 and 2 show that, in spite of a shorter residence time, a higher production in this GPR was achieved. Figure 3 shows that the rubber content of the heterophasic polypropylene produced in IE01-IE03 was higher than that in CE01. Figure 5, however, shows that the XS of the polymer component in the first GPR (into which no ethylene comonomer was introduced) was lower in IE01 compared to CE01. Figure 4 shows a favourable production split in the 2^{nd} GPR achieved by IE01-IE03.

A stability test of approximately one week was carried out under the same conditions as specified above. The operability of the process was good, and no process issues, fouling, or other process disturbances were observed.

### HOMO PP

A multi-stage PP polymerization, mimicking Borstar PP process conditions, was carried out on the pilot scale as per the conditions provided in Table 2. A two-reactor process set up was used. The aim was to produce ultra-pure polypropylene homopolymer having final MFR of 2 - 4 g/10 min.

In Examples 1-3 (IE01-IE03) a high amounts of aluminium alkyl were introduced into the prepolymerisation reactor. In Comparative Example 1 a low amount of aluminium alkyl was introduced into the prepolymerisation reactor, which is typical of the aluminium alkyl feed in polypropylene production plants.

**Table 2**

| **Prepolymerisation reactor** | **CE01** | **IE01** | **IE02** | **IE03** |
|---|---|---|---|---|
| Temp. (°C) | 20.0 | 20.0 | 20.0 | 20.0 |
| Press. (kPa) | 5429.4 | 5429.4 | 5428.8 | 5426.1 |
| Catalyst feed (g/h) | 3.0 | 2.1 | 2.1 | 2.0 |
| TEAL feed (g/kg C3) | 0.0622 | 0.0622 | 0.0621 | 0.0621 |
| Feed H2/C3 ratio (mol/kmol) | 0.034 | 0.034 | 0.034 | 0.034 |
| Residence time (h) | 0.2 | 0.2 | 0.2 | 0.2 |
| Productivity (g PP/g cat) | 367 | 913 | 799 | 737 |

| **Loop reactor** | | | | |
|---|---|---|---|---|
| Temp. (°C) | 70.02 | 70.02 | 69.99 | 70.00 |
| Press. (kPa) | 5413.37 | 5413.37 | 5423.55 | 5415.92 |
| Feed H2/C3 ratio (mol/kmol) | 0.10 | 0.10 | 0.10 | 0.10 |
| Solid Concentration (wt.-%) | 21.57 | 21.57 | 22.63 | 22.89 |
| Polymer Split (loop + prepolymerisation reactor, %) | 65 | 60 | 61 | 60 |
| Polymer residence time (h) | 0.39 | 0.39 | 0.40 | 0.42 |
| MFR2 (g/10 min) | 2.83 | 2.83 | 2.53 | 2.58 |
| XS (wt-%) | 1.1 | 0.37 | 0.33 | 0.49 |
| APS (mm) | 1.046 | 1.046 | 1.108 | 1.03 |
| Bulk Density (kg/m3) | 356 | 356 | 356 | 350 |

| **Gas phase reactor** | | | | |
|---|---|---|---|---|
| Temp. (°C) | 80.03 | 80.03 | 79.99 | 80.00 |
| Press. (kPa) | 2399.86 | 2399.86 | 2400.05 | 2400.05 |
| H2/C3 ratio (mol/kmol) | 1.55 | 1.55 | 1.41 | 1.62 |
| Polymer Split (%) | 35 | 40 | 39 | 40 |
| Residence time (h) | 2.10 | 1.80 | 1.80 | 1.80 |
| MFR2 (g/10 min) | 4.64 | 4.64 | 2.45 | 3.82 |
| XS (wt-%) | 1.1 | 0.25 | 0.17 | 0.22 |
| Bulk Density (kg/m3) | 328 | 328 | 333 | 333 |

| **After reactors** | | | | |
|---|---|---|---|---|
| Total Production rate from Silo (kg/h) | 63.0 | 65.0 | 66.0 | 66.3 |
| Total productivity (kg PP/g cat) | 22.0 | 31.0 | 31.4 | 32.4 |

| **Final PP product, powder** | | | | |
|---|---|---|---|---|
| MFR2 (g/10 min) | 3.2 | 3.2 | 2.12 | 2.83 |
| XS (wt-%) | 1.00 | 0.32 | 0.26 | 0.41 |
| Bulk Density (kg/m3) | 360 | 354 | 355 | 357 |
| PS < 0,106 mm | 0 | 0 | 0 | 0.03 |
| PS > 0,106 mm | 0.3 | 0.24 | 0.2 | 0.74 |
| PS > 0,250 mm | 1.0 | 1.08 | 0.57 | 1.72 |
| PS > 0,355 mm | 30.6 | 30.62 | 18.98 | 33.5 |
| PS > 0,850 mm | 66.5 | 66.32 | 73.96 | 61.97 |
| PS > 2,0 mm | 1.5 | 1.72 | 6.25 | 2.04 |
| PS > 4,0 mm | 0.0 | 0.02 | 0.04 | 0 |
| APS (mm) | 1.2 | 1.186 | 1.359 | 1.153 |

| **Final PP product, pellet** | | | | |
|---|---|---|---|---|
| MFR2 (g/10 min) | 3.2 | 3.31 | 2.12 | 2.69 |
| Tm (°C) | 156.7 | 156.7 | 155.7 | 155.3 |
| Tcr (°C) | 116 | 116 | 117.1 | 116.9 |

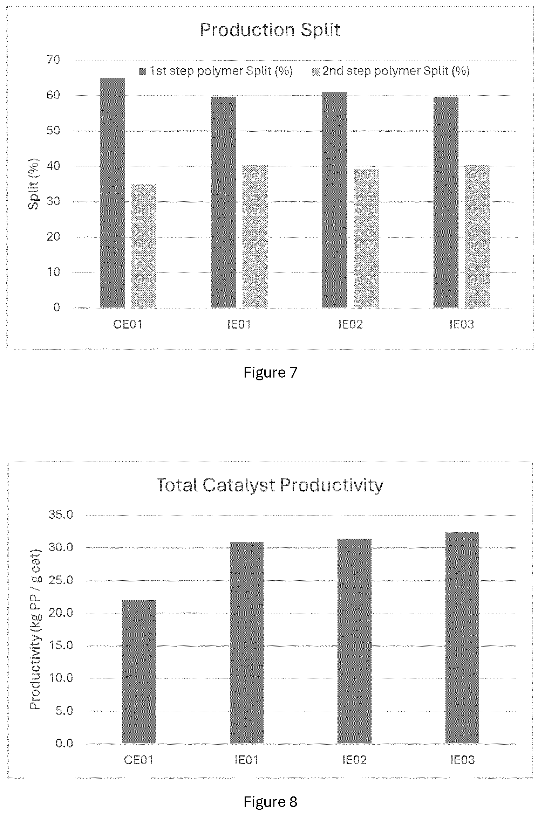

Certain measured values in this table are shown in bar charts (Figures 6 to 8). The improvement of xylene solubles in the propylene homopolymer produced in IE01-IE03 is shown in Figure 6. Figure 7 shows the benefits on production split. The improvement on catalyst productivity is shown in Figure 8.

A stability test of approximately one week was carried out under the same conditions as specified above. The operability of the process was good, and no process issues, fouling, or other process disturbances were observed.

### Summary

As demonstrated by the examples, the process of the present invention provides excellent productivity, particularly in the final GPR step, with an improved production split. The process also enables stable production and good operability, with a reduced likelihood of carry-over fouling, especially when two gas phase reactors are present, i.e. from one reactor to the other. Furthermore, the process allowed for greater control over critical product properties, e.g. melt flow rate.

The versatility of the process is also demonstrated by the fact that these favourable properties were observed in the production of both polypropylene homopolymer and polypropylene copolymer (e.g., heterophasic polypropylene).

In the production of polypropylene homopolymer, the xylene solubles in the polypropylene matrix were low, indicating a high level of isotacticity compared to the comparative example. In the production of heterophasic polypropylene, the process favourably increased the xylene solubles the rubber component within the polypropylene matrix, while decreasing the xylene solubility of the crystalline matrix relative to the comparative example. This means that higher rubber contents can be achieved more effectively.

## Claims

1. A process for producing a polyolefin homo- or copolymer in a continuous multistage polymerisation reaction, the process comprising:
polymerising an olefin monomer in the presence of a single-site catalyst in a prepolymerisation reactor to obtain a prepolymerised catalyst; and
polymerising the olefin monomer in the presence of the prepolymerised catalyst in a first reactor to obtain a first polyolefin component,
wherein aluminium alkyl is introduced into the prepolymerisation reactor in an amount in the range from 0.015 to 0.3 g/kg of olefin monomer.

2. The process of claim 1, wherein the amount of aluminium alkyl introduced is in the range from 0.02 to 0.1 g/kg total olefin monomer.

3. The process of claim 1 or claim 2, wherein the aluminium alkyl is selected from triethyl-aluminium (TEAL), tri-isobutyl-aluminium (TIBA) and any mixture thereof.

4. The process of any claim 3, wherein the aluminium alkyl is TEAL.

5. The process of any preceding claim, wherein the aluminium alkyl and the olefin monomer are introduced into the prepolymerisation reactor as a mixture.

6. The process of any preceding claim, wherein the single site catalyst is introduced into the prepolymerisation reactor independently from the aluminium alkyl.

7. The process of any preceding claim, wherein the first reactor is a loop reactor.

8. The process of any preceding claim, wherein the process further comprises polymerising the olefin monomer in the presence of the single-site catalyst and the first polymer component in a second reactor to form a second polymer component.

9. The process of claim 8, wherein the second reactor is a gas phase reactor.

10. The process of any preceding claim, wherein the polyolefin is polypropylene and the olefin monomer is propylene.

11. The process of any preceding claim, wherein the polyolefin is a homopolymer.

12. The process of any one of claims 1 to 10, wherein the polyolefin is a copolymer and the process comprises polymerising the olefin monomer in the presence of at least one comonomer, optionally wherein the at least one comonomer is selected from ethylene and a C₃-C₁₀ alpha olefin.

13. The process of claim 12, wherein the process comprises polymerising the olefin monomer in the presence of the comonomer in the second reactor.

14. The process of claim 12 or claim 13, wherein the comonomer is ethylene.

15. The process of claim 14, wherein the copolymer is a heterophasic polypropylene copolymer.

16. The process of any preceding claim, wherein the single site catalyst is a metallocene catalyst, preferably a supported metallocene catalyst.
